(19) Europäisches Patentamt
European Patent Office
Office européen des brevets

(11) **EP 4 716 331 A1**

(12) **EUROPEAN PATENT APPLICATION**
published in accordance with Art. 153(4) EPC

(43) Date of publication:
**25.03.2026 Bulletin 2026/13**

(21) Application number: **24927790.6**

(22) Date of filing: **06.03.2024**

(51) International Patent Classification (IPC):
**H04W 72/044** $^{(2023.01)}$

(52) Cooperative Patent Classification (CPC):
**H04L 1/08; H04W 72/0453**

(86) International application number:
**PCT/CN2024/080379**

(87) International publication number:
**WO 2025/184841 (11.09.2025 Gazette 2025/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Quectel Wireless Solutions Co., Ltd.**
**Shanghai 201601 (CN)**

(72) Inventors:
• **LYU, Ling**
  **Shanghai, 201601 (CN)**
• **ZHAO, Zheng**
  **Shanghai, 201601 (CN)**
• **HUANG, Qufang**
  **Shanghai, 201601 (CN)**
• **LIU, Jin**
  **Shanghai, 201601 (CN)**

(74) Representative: **Fish & Richardson P.C.**
**Highlight Business Towers**
**Mies-van-der-Rohe-Straße 8**
**80807 München (DE)**

(54) **WIRELESS COMMUNICATION METHOD AND COMMUNICATION DEVICE**

(57) A wireless communication method and a communications device are provided. The method includes: receiving, by a first device, a calculation result of first-type data of one or more second devices and/or second-type data of one or more second devices, where the first-type data is to-be-calculated data, the first-type data of the one or more second devices is carried on a first frequency band, and the calculation result is determined based on channel superposition of the first frequency band; and the second-type data is non-calculation data, and the second-type data of the one or more second devices is carried on one or more second frequency bands. In the present application, in a communication-calculation integrated process, a calculation process of the to-be-calculated data and a communication process of the non-calculation data may be performed in parallel. This facilitates avoiding a serial delay between communication and calculation.

A first device receives a calculation result of first-type data of one or more second devices and/or second-type data of one or more second devices — S210

FIG. 2

**Description**

**TECHNICAL FIELD**

The present application relates to the field of wireless communications technologies, and more specifically, to a wireless communication method and a communications device.

**BACKGROUND**

With the development of communications technologies, a communication-calculation integrated architecture in a wireless network is widely used in various applications. However, in a communication-calculation integrated architecture oriented to a heterogeneous data requirement, there is a delay problem. It may be difficult to cope with an application scenario with a strict delay constraint.

**SUMMARY**

Embodiments of the present application provide a wireless communication method and a communications device. Description is provided from the several following aspects below.

According to a first aspect, a wireless communication method is provided, including: receiving, by a first device, a calculation result of first-type data of one or more second devices and/or second-type data of one or more second devices, where the first-type data is to-be-calculated data, the first-type data of the one or more second devices is carried on a first frequency band, and the calculation result is determined based on channel superposition of the first frequency band; and the second-type data is non-calculation data, and the second-type data of the one or more second devices is carried on one or more second frequency bands.

According to a second aspect, a wireless communication method is provided, including: transmitting, by a second device, first-type data and/or second-type data to a first device, where the first-type data is to-be-calculated data, the first-type data is carried on a first frequency band, and calculation of the first-type data is implemented based on channel superposition of the first frequency band; and the second-type data is non-calculation data, and the second-type data is carried on a second frequency band.

According to a third aspect, a communications device is provided. The communications device is a first device. The communications device includes: a receiving module, receiving a calculation result of first-type data of one or more second devices and/or second-type data of one or more second devices, where the first-type data is to-be-calculated data, the first-type data of the one or more second devices is carried on a first frequency band, and the calculation result is determined based on channel superposition of the first frequency band; and the second-type data is non-calculation data, and the second-type data of the one or more second devices is carried on one or more second frequency bands.

According to a fourth aspect, a communications device is provided. The communications device is a second device. The communications device includes: a transmitting module, transmitting first-type data and/or second-type data to a first device, where the first-type data is to-be-calculated data, the first-type data is carried on a first frequency band, and calculation of the first-type data is implemented based on channel superposition of the first frequency band; and the second-type data is non-calculation data, and the second-type data is carried on a second frequency band.

According to a fifth aspect, a communications device is provided, including a transceiver, a memory, and a processor. The memory is configured to store a program. The processor is configured to invoke the program in the memory, and control the transceiver to receive or transmit a signal, to cause the communications device to perform the method according to the first aspect.

According to a sixth aspect, a communications device is provided, including a transceiver, a memory, and a processor. The memory is configured to store a program. The processor is configured to invoke the program in the memory, and control the transceiver to receive or transmit a signal, to cause the communications device to perform the method according to the second aspect.

According to a seventh aspect, an apparatus is provided, including a processor, invoking a program from a memory, to cause the apparatus to perform the method according to the first aspect or the second aspect.

According to an eighth aspect, a chip is provided. The chip includes a processor, invoking a program from a memory, to cause a device installed with the chip to execute the method according to the first aspect or the second aspect.

According to a ninth aspect, a computer-readable storage medium is provided. The computer-readable storage medium stores a program. The program causes a computer to perform the method according to the first aspect or the second aspect.

According to a tenth aspect, a computer program product is provided, including a program, where the program causes a computer to perform the method according to the first aspect or the second aspect.

According to an eleventh aspect, a computer program is provided, where the computer program causes a computer to execute the method according to the first aspect or the second aspect.

In the present application, in a communication-calculation integrated process, a calculation process of to-be-calculated data and a communication process of non-calculation data may be performed in parallel. This facilitates avoiding a serial delay between communication and calculation.

## BRIEF DESCRIPTION OF THE DRAWINGS

FIG. 1 is an example diagram of a system architecture of a wireless communications system to which an embodiment of the present application is applicable.

FIG. 2 is a schematic flowchart of a wireless communication method according to an embodiment of the present application.

FIG. 3 is a schematic flowchart of a wireless communication method according to another embodiment of the present application.

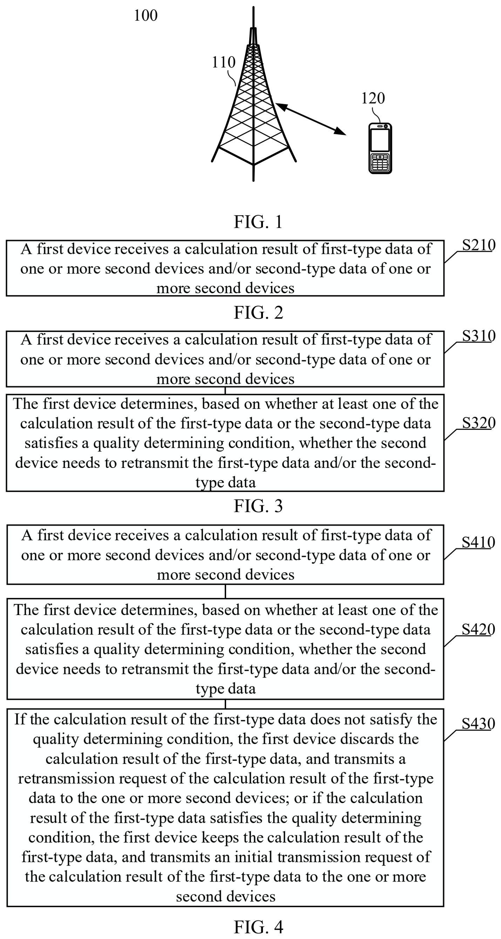

FIG. 3 is a schematic flowchart of a wireless communication method according to another embodiment of the present application.

FIG. 4 is a schematic flowchart of a wireless communication method according to another embodiment of the present application.

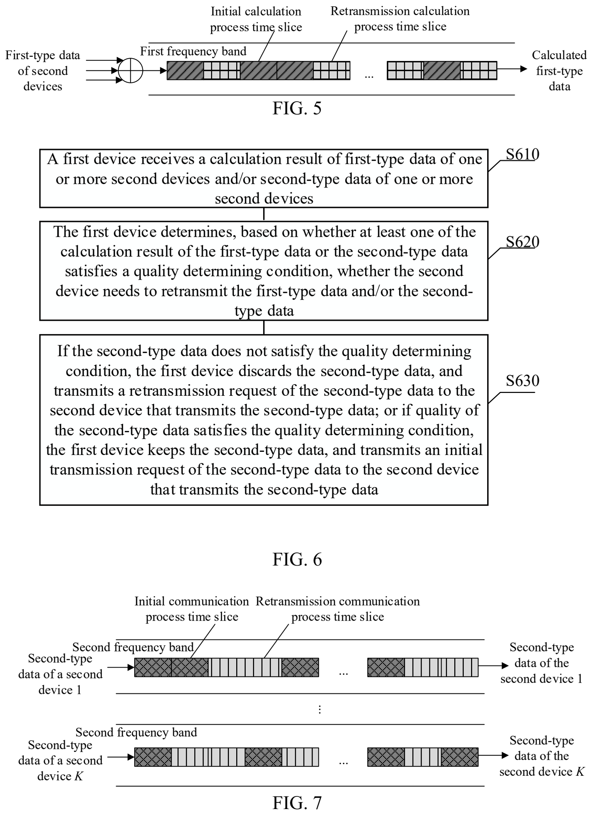

FIG. 5 is a schematic diagram of a time slice of a calculation process according to an embodiment of the present application.

FIG. 6 is a schematic flowchart of a wireless communication method according to another embodiment of the present application.

FIG. 7 is a schematic diagram of a time slice of a communication process according to an embodiment of the present application.

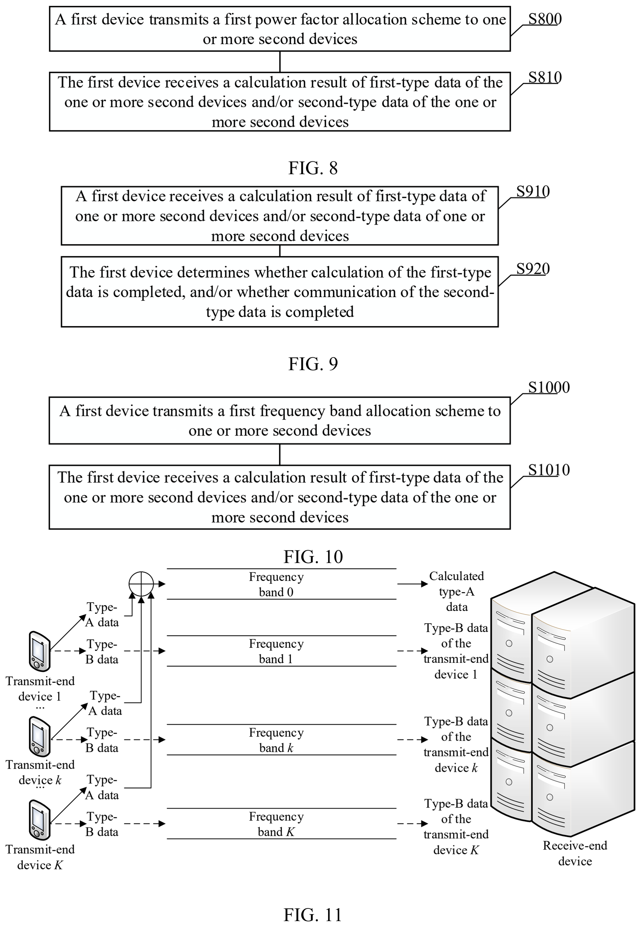

FIG. 8 is a schematic flowchart of a wireless communication method according to another embodiment of the present application.

FIG. 9 is a schematic flowchart of a wireless communication method according to another embodiment of the present application.

FIG. 10 is a schematic flowchart of a wireless communication method according to another embodiment of the present application.

FIG. 11 is a schematic flowchart of a transmission process of A-type/B-type data.

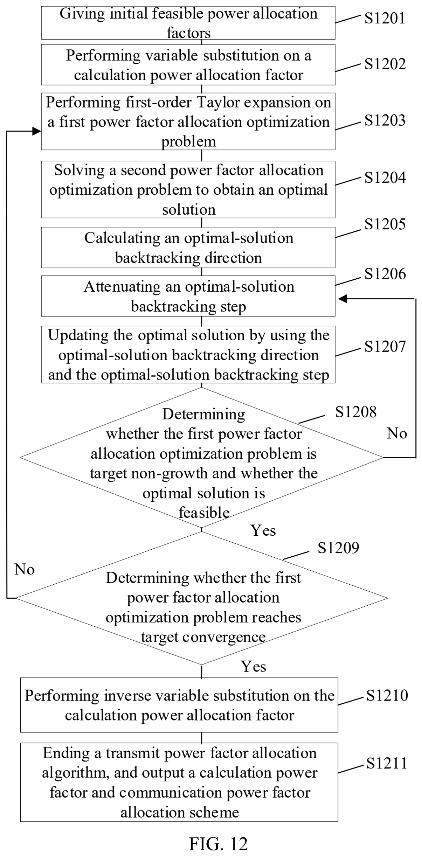

FIG. 12 is a schematic flowchart of a process of determining a calculation power factor/a communication power factor.

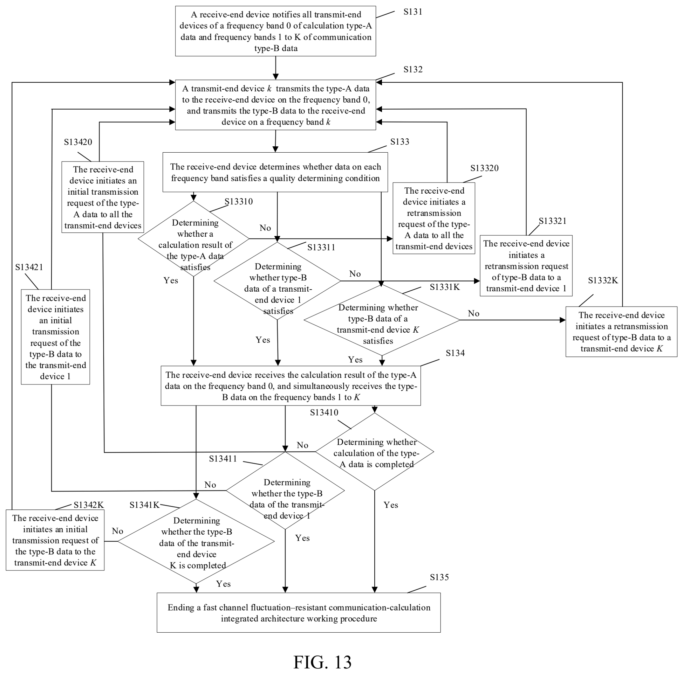

FIG. 13 is a schematic flowchart of a wireless communication method according to an embodiment of the present application.

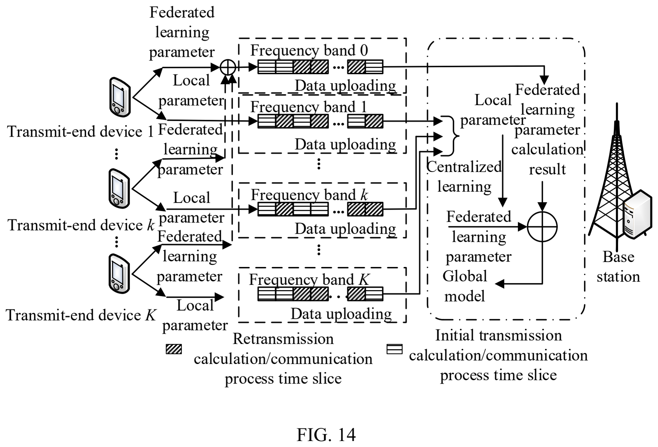

FIG. 14 is a diagram of an application example of a wireless communication method in a semi-federated learning scenario according to the present application.

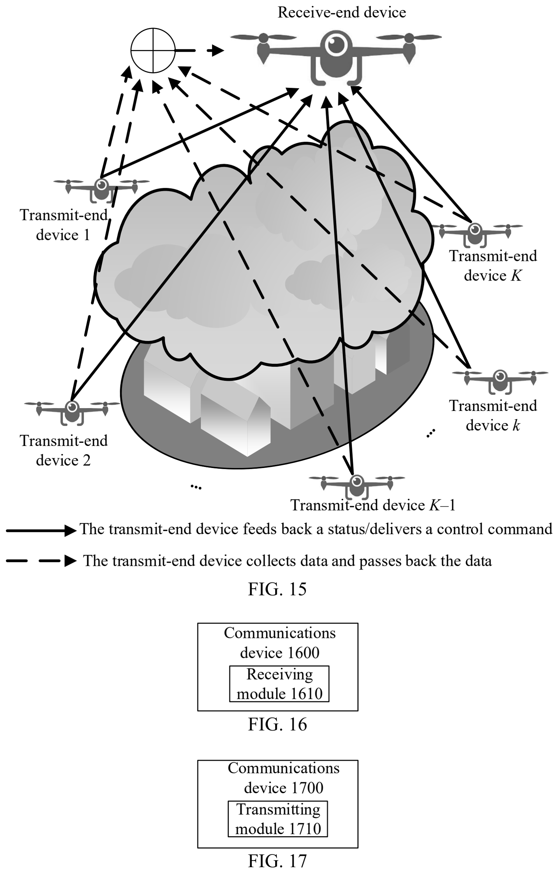

FIG. 15 is a diagram of an application example of a wireless communication method in an emergency rescue scenario according to the present application.

FIG. 16 is a schematic diagram of a structure of a communications device according to an embodiment of the present application.

FIG. 17 is a schematic diagram of a structure of a communications device according to another embodiment of the present application.

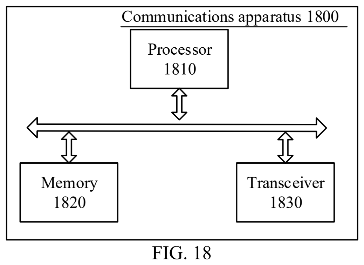

FIG. 18 is a schematic diagram of a structure of a communications apparatus according to an embodiment of the present application.

## DESCRIPTION OF THE EMBODIMENTS

The following clearly and completely describes the technical solutions in the embodiments of the present application with reference to the accompanying drawings in the embodiments of the present application. Apparently, the described embodiments are merely some but not all of the embodiments of the present application.

Architecture of a communications system

FIG. 1 is an example diagram of a system architecture of a wireless communications system 100 to which an embodiment of the present application is applicable. The wireless communications system 100 may include a network device 110 and a terminal device 120. The network device 110 may be a device that communicates with the terminal device 120. The network device 110 may provide communication coverage for a specific geographic region, and may communicate with the terminal device 120 located within the coverage.

FIG. 1 shows one network device and one terminal device as an example. Optionally, the wireless communications system 100 may include one or more network devices 110, and/or one or more terminal devices 120. For one network device 110, the one or more terminal devices 120 may be located within network coverage of the network device 110; or may be located outside network coverage of the network device 110; or may be located partially within network coverage of the network device 110, and may be located partially outside the network coverage of the network device 110. This is not limited in embodiments of the present application.

Optionally, the wireless communications system 100 may further include other network entities such as a network controller and a mobility management entity. This is not limited in embodiments of the present application.

It should be understood that the technical solutions in embodiments of the present application may be applied to various communications systems, for example, a fifth generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in the present application may be further applied to a future communications system, such as a 6th generation mobile communications system or a satellite communications system.

The terminal device in embodiments of the present application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of the present application may be a device providing a user with voice and/or data connectivity and capable of connecting people, objects, and machines, such as a handheld device or a vehicle-mounted device having a wireless connection function. The terminal device in embodiments of the present application may be a mobile phone (mobile phone), a tablet computer (Pad), a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be configured to function as a base station. For example, the UE may function as a scheduling entity, which provides a sidelink signal between UEs in vehicle-to-everything (vehicle-to-everything, V2X), device-to-device (device to device, D2D), or the like. For example, a cellular phone and a vehicle communicate with each other by using a sidelink signal. A cellular phone and a smart home device communicate with each other, without relay of a communication signal through a base station.

A network device in embodiments of the present application may be a device for communicating with the terminal device. The network device may also be referred to as an access network device or a radio access network device. For example, the network device may be a base station. The network device in embodiments of the present application may be a radio access network (radio access network, RAN) node (or device) that connects the terminal device to a wireless network. The base station may broadly cover various names in the following, or may be interchangeable with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that assumes the function of a base station in device-to-device D2D, V2X, and machine-to-machine (machine-to-machine, M2M) communications, a network-side device in a 6th generation (6th generation, 6G) network, a device that assumes the function of a base station in a future communications system, or the like. The base station may support networks with a same access technology or different access technologies. A specific technology and a specific device form used by the network device are not limited in embodiments of the present application.

The base station may be fixed or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device in communication with another base station.

In some deployments, the network device in embodiments of the present application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of the present application, a scenario of the network device and the terminal device is not limited.

It should be understood that all or some of functions of the communications device in the present application may also be implemented by software functions running on hardware, or by virtualization functions instantiated on a platform (for example, a cloud platform).

Communication-calculation integrated architecture

In a future 6G edge network, a communication-calculation integrated architecture in a wireless network is to be widely used in various applications, especially in an application scenario that satisfies a heterogeneous data requirement. For example, in an emergency rescue scenario or a military reconnaissance scenario, a plurality of agents (such as an unmanned aerial vehicle) need to be released at a central control node, and environment detection and cluster control of multi-agent cooperation are implemented by using the communication-calculation integrated architecture. For another example, training of a distributed machine learning model in the wireless network is a key problem to be resolved. Semi-federated learning in recent years implements both model aggregation and uploading of local data by using the communication-calculation integrated architecture, thereby effectively improving model training performance. Therefore, studying the communication-calculation integrated architecture oriented to a heterogeneous data requirement has a relatively clear practical meaning.

In particular, "calculation" herein specifically indicates an over-the-air computation technology. The over-the-air computation technology is a new non-orthogonal access manner. Conventional orthogonal and non-orthogonal access manners only focus on how to transmit information from a transmit end to a receive end. Over-the-air computation uses a superposition characteristic of radio channels, so that a plurality of transmit ends transmit information on the same time-frequency resource. In this way, a base station receives superposed information transmitted by various transmit ends. Further, specific pre-processing and post-processing are separately performed on the transmit end and the receive end, and a plurality of signal computation methods may be implemented in a communication process through over-the-air computation. Based on this, over-the-air computation can implement mutual unification of communication and calculation processes.

However, in the communication-calculation integrated architecture oriented to the heterogeneous data requirement, the calculation process is usually performed after a receive-end device receives complete communication data. To be specific, the receive end first receives complete transmitted data, and then executes a calculation task by using a local calculation resource. However, such a transmission-before-calculation architecture causes a high delay problem (specifically, a serial delay between communication and calculation), and cannot support efficient combination of communication and calculation and especially cannot cope with an application scenario with a strict delay constraint.

Based on this, the following describes in detail the method in embodiments of the present application. As shown in FIG. 2, an embodiment of the present application provides a wireless communication method. The wireless communication method may be applied to the foregoing communication-calculation integrated architecture, and is executed by a first device and a second device. The first device may be the foregoing network device, for example, a base station. The second device may be the foregoing terminal device, for example, a robot arm, a camera, or an unmanned aerial vehicle.

The method shown in FIG. 2 may include step S210. In step S210, the first device receives a calculation result of first-type data of one or more second devices and/or second-type data of one or more second devices.

The first-type data is to-be-calculated data. The first-type data of the one or more second devices may be carried on a first frequency band. The calculation result of the first-type data may be determined based on channel superposition of the first frequency band. In other words, the one or more second devices may transmit the to-be-calculated data on the same spectrum, and implement a calculation process of the to-be-calculated data based on a channel superposition characteristic on the frequency band. For example, the first-type data may be data collected by each second device, such as environment information. In this case, the one or more second devices may superpose data collected by itself on the same frequency band and transmit superposed data to the first device, so that the first device obtains a calculation result. For another example, the first-type data may alternatively be model training data of each second device, such as a federated learning model parameter. In this case, the one or more second devices may superpose model training data of itself on the same frequency band and transmit superposed model training data to the first device, so that the first device performs model training.

The second-type data is non-calculation data. The second-type data of the one or more second devices may be carried in one or more second frequency bands. In other words, the one or more second devices may also transmit non-calculation data of itself on different spectrums, to implement a communication process of the second-type data. For example, the second-type data may be local information of each second device or running status information of each second device. Further, the second-type data may include a plurality of types of heterogeneous data. This is not limited in the present application.

It should be noted that the first frequency band and the plurality of second frequency bands may be orthogonal. This facilitates ensuring that data of various second devices does not interfere with each other. It should be noted that the first frequency band and the second frequency band may also be used for downlink transmission. For example, the first device may broadcast information, such as a retransmission feedback or the calculation result of the first-type data, to all the second devices by using the first frequency band. In another aspect, the first device may further separately transmit information, such as a retransmission feedback, to various second devices by using various second frequency bands at the same time.

It should be noted that calculation of the first-type data may include a plurality of calculation effects.

In an example, before transmitting the first-type data on the first frequency band, the second device may perform pre-processing on the first-type data to implement different calculation processes. For example, the second device may multiply the first-type data of the second device by a specific weight. After channel superposition of a first frequency channel, the first device can obtain a specific weighted sum of the first-type data of the one or more second devices.

In another example, after receiving the calculation result of the first-type data of the one or more second devices on the first frequency band, the first device may perform post-processing on the calculation result to obtain a further calculation result. For example, the second device performs a logarithm operation on the first-type data of the second device to obtain a value that is divided by a quantity of the second devices. After channel superposition of the first frequency channel, the first device obtains the calculation result, and may perform an exponential operation on the calculation result, to obtain a geometric mean value of the first-type data of the one or more second devices.

The calculation process of the first-type data and the communication process of the second-type data may be performed in parallel. In other words, the second device may simultaneously transmit the first-type data and the second-type data, and the first device may receive the second-type data while receiving the calculation result of the first-type data.

Based on the present application, in a communication-calculation integrated process, a calculation process of to-be-calculated data and a communication process of non-calculation data may be performed in parallel. This facilitates reducing a delay. In addition, to-be-calculated data of different second devices may be transmitted on the same frequency band. This facilitates saving a frequency band resource.

The calculation process of the first-type data and the communication process of the second-type data may be divided into several time slices with extremely short durations. A fixed quantity of data segments are transmitted in each time slice. Radio channel state information may remain unchanged in one time slice, but vary independently in different time slices. An actual duration of each time slice depends on an actual wireless propagation environment of a region in which a communication-calculation integrated architecture is deployed. For example, for a region with a poor wireless propagation condition, an actual duration of each time slice may be at a millisecond level; or for a region with a good wireless propagation condition, an actual duration of each time slice may be at a second level. However, when the channel state information fluctuates rapidly, time slice transmission in the calculation process of the first-type data and the communication process of the second-type data may fail, thereby affecting calculation of the first-type data and communication of the second-type data.

Based on this, as shown in FIG. 3, the method in this embodiment of the present application may further include step S320. In step S320, the first device may determine, based on whether at least one of the calculation result of the first-type data or the second-type data satisfies a quality determining condition, whether the second device needs to retransmit the first-type data and/or the second-type data. Based on this, this facilitates resisting channel fluctuation, and improves a success rate of calculation of the first-type data and communication of the second-type data.

In some implementations, as shown in FIG. 4, the method in this embodiment of the present application may further include step S430. In step S430, if the calculation result of the first-type data does not satisfy the quality determining condition, the first device may discard the calculation result of the first-type data, and transmit a retransmission request of the calculation result of the first-type data to the one or more second devices; or if the calculation result of the first-type data satisfies the quality determining condition, the first device may keep the calculation result of the first-type data, and transmit an initial transmission request of the calculation result of the first-type data to the one or more second devices. In other words, when the result, received by the first device, of the first-type data does not satisfy the preset quality determining condition, the first device may transmit the retransmission request of the first-type data to all the second devices. When the result, received by the first device, of the first-type data satisfies the preset quality determining condition, the first device may transmit an initial transmission request of next first-type data to all the second devices. The retransmission request or the initial transmission request of the first device facilitates the second device in clearly knowing to-be-transmitted first-type data.

Further, the calculation process of the first-type data may include a first-type time slice and a second-type time slice, the retransmission request of the first-type data may be used to request the first-type time slice, the first-type time slice may be used to retransmit the calculation result, whose quality does not satisfy the quality determining condition, of the first-type data, the initial transmission request of the first-type data may be used to request the second-type time slice, and the second-type time slice may be used for initially transmitting the calculation result of the first-type data. For example, as shown in FIG. 5, the first-type time slice of the first-type data may be referred to as an "initial calculation process time slice", and the second-type time slice of the first-type data may be referred to as a "retransmission calculation process time slice". In other words, the second device may separate the time slice for retransmitting the first-type data from the time slice of initially transmitting the first-type data. This facilitates avoiding chaos in the calculation process of the first-type data. Correspondingly, the retransmission request or the initial transmission request of the first-type data may alternatively be carried on the first frequency band.

In some other implementations, as shown in FIG. 6, the method in this embodiment of the present application may further include step S630. In step S630, if the second-type data does not satisfy the quality determining condition, the first device may discard the second-type data, and transmit a retransmission request of the second-type data to the second device that transmits the second-type data; or if quality of the second-type data satisfies the quality determining condition, the first device may keep the second-type data, and transmit an initial transmission request of the second-type data to the second device that transmits the second-type data. In other words, when the result, received by the first device, of the second-type data does not satisfy the preset quality determining condition, the first device may transmit the retransmission request of the second-type data to the second device that transmits the second-type data. In other words, when the result, received by the first device, of the second-type data satisfies the preset quality determining condition, the first device may transmit an initial transmission request of next second-type data to the second device that transmits the second-type data. The retransmission request or the initial transmission request of the first device facilitates the second device in clearly knowing to-be-transmitted second-type data.

Further, the communication process of the second-type data may include a first-type time slice and a second-type time slice, the retransmission request of the second-type data may be used to request the first-type time slice, the first-type time slice may be used to retransmit the second-type data whose quality does not satisfy the quality determining condition, the initial transmission request of the second-type data may be used to request the second-type time slice, and the second-type time slice may be used for initially transmitting the second-type data. For example, as shown in FIG. 7, the first-type time slice of the second-type data may be referred to as an "initial communication process time slice", and the second-type time slice of the second-type data may be referred to as a "retransmission communication process time slice". In other words, the second device may separate the time slice for retransmitting the second-type data from the time slice of initially transmitting the second-type data. This facilitates avoiding chaos in the calculation process of the second-type data. Correspondingly, the retransmission request or the initial transmission request of the second-type data may be carried on the second frequency band corresponding to the second data.

It should be noted that the method in this embodiment of the present application may further include both step S430 shown in FIG. 4 and step S630 shown in FIG. 6, and step S430 and step S630 do not interfere with each other and are independent of each other. In other words, the time slice of the initial transmission or retransmission calculation process on the first frequency band does not affect the time slice of the initial transmission or retransmission communication process on the second frequency band. In addition, total quantities of time slices for transmission on the first frequency band and the second frequency band are not the same. This is not limited in the present application.

In some implementations, the quality determining condition of the calculation result of the first-type data may be that a mean square error value of the calculation result of the first-type data is less than a preset threshold. In other words, when the mean square error value of the calculation result of the first-type data is less than the preset threshold, it may be considered that the calculation result of the first-type data satisfies the quality determining condition. When the mean square error value of the calculation result of the first-type data is not less than the preset threshold, it may be considered that the calculation result of the first-type data does not satisfy the quality determining condition.

The mean square error value of the calculation result of the first-type data is determined based on following formula:

$$MSE = \sum_{k=1}^{K} q_k^2 \mid v^H h_k - 1 \mid^2 + \frac{\tilde{\sigma}^2}{v} \qquad (1)$$

Herein, *MSE* is the mean square error value of the calculation result of the first-type data, $q_k$ is an over-the-air computation weight of the second device *k, v* is a beamforming vector used by the first device to receive the calculation result of the first-type data, v is a normalization factor used by the first device to receive the calculation result of the first-type data, $h_k$ is a channel state vector from the second device *k* to the first device, and $\tilde{\sigma}^2$ is a noise power.

For example, the preset threshold of the mean square error value of the calculation result of the first-type data may be $\gamma$. If the calculation result of the first-type data satisfies $MSE < \gamma$, the calculation result satisfies calculation quality determining. If $MSE \geq \gamma$, the calculation result does not satisfy calculation quality determining.

In some implementations, the quality determining condition of the second-type data may be that a data rate of the second-type data is greater than or equal to a preset threshold. In other words, when a data rate of a calculation result of the second-type data is greater than or equal to the preset threshold, it may be considered that the calculation result of the second-type data satisfies the quality determining condition. When a data rate of a calculation result of the second-type data is less than the preset threshold, it may be considered that the calculation result of the second-type data does not satisfy the quality determining condition.

The data rate of the second-type data may be determined based on the following formula:

$$R_k = B^D \, log_2 \left(1 + \frac{\zeta |\boldsymbol{b}^H \boldsymbol{h}_k|^2}{\tilde{\sigma}^2}\right) \quad (2)$$

Herein, $R_k$ is the data rate, $B^D$ is a bandwidth that is used for completing communication of the second-type data, $\boldsymbol{b}$ is a beamforming vector that is used by the first device to receive the second-type data, and $\zeta$ is a normalization factor that is used by the first device to receive the second-type data. It should be noted that bandwidths of second frequency bands on which different second devices transmit second-type data may also be different. This is not limited in the present application.

For example, the preset threshold of the data rate of the second-type data may be $R_{min}$. When the second-type data satisfies $R_{min} \geq R_K$, the second-type data satisfies calculation quality determining. When the second-type data satisfies $R_{min} < R_K$, the second-type data does not satisfy a quality determining standard.

In some implementations, as shown in FIG. 8, before the first device receives the calculation result of the first-type data of the one or more second devices and/or the second-type data of the one or more second devices, the method in this embodiment of the present application may further include step S800. In step S800, the first device transmits a first power factor allocation scheme to the one or more second devices, where the first power factor allocation scheme may be used for determining a calculation power factor and/or a communication power factor, the calculation power factor may be a transmit power of the first-type data on the first frequency band, and the communication power factor may be a transmit power of the second-type data on the second frequency band. In other words, before the second device transmits the first-type data and/or the second-type data, the first device may indicate the transmit power of the first-type data and/or the transmit power of the second-type data to the second device. This facilitates reducing energy consumption of the second device.

The following describes in detail how the first device determines the first power factor allocation scheme.

The first power factor allocation scheme may be determined based on the first power factor allocation optimization problem, and the first power factor allocation optimization problem may be:

$$\min_{\zeta, v} T^{\mathrm{ALL}} + (1 - \alpha) E^{\mathrm{ALL}} \quad (3)$$

Herein, $v$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of first-type data and/or the communication process of the second-type data, $\alpha$ constant greater than 0 and less than 1, and $\alpha$ is a weighting factor of the total expected delay and the total expected energy consumption. It should be noted that $T^{ALL}$ and $E^{ALL}$ are implicit functions for the calculation power factor and the communication power factor. The first power factor allocation optimization problem facilitates determining an initial feasible calculation power factor and an initial feasible communication power factor.

The first power factor allocation optimization problem may have a first power factor allocation constraint, and the first power factor allocation constraint may be related to a plurality of the following factors: a minimum calculation success probability correlation of the first-type data, a path loss value of the second device, a maximum transmit power and a minimum transmit power that can be used by the second device for calculation or communication, or a minimum calculation success probability of the first-type data. For example, the first power factor allocation constraint may be:

$$\zeta \in [C_3^{DU}, \beta_{min} \hat{p}_{max}] \quad (4)$$

$$v \in [0, \beta_{min} \hat{p}_{min}] \quad (5)$$

$$P^A \in [P_{min}^A, 1] \, (6)$$

Herein, $C_3^{DU}$ is a non-negative constant, $C_3^{DU}$ is related to a minimum calculation success probability of the first-type data, $\beta_{min}$ is a minimum path loss value of each second device, $\hat{p}_{max}$ is a maximum transmit power that may be used by each second device for calculation or communication, $\hat{p}_{min}$ is a minimum transmit power that may be used by each second device for calculation or communication, and $P_{min}^A$ is a minimum calculation success probability of the first-type data. The calculation power factor or the communication power factor that satisfies the first power factor allocation constraint is the initial feasible calculation power factor or the initial feasible communication power factor.

The first power factor allocation optimization problem may be solved based on an equivalent variable of the calculation power factor, and the equivalent variable of the calculation power factor may be determined based on the following formula:

$$z = \frac{1}{\Phi\left[(K^2\gamma - 2K - K^2\tilde{\sigma}^2/v)/\sqrt{3K}\right]} \quad (7)$$

Herein, $z$ is the equivalent variable obtained after variable substitution of the calculation power allocation factor $v$, $K$ is a quantity of second devices, $\gamma$ is a threshold of a mean square error value of the calculation result of the first-type data, $\Phi$ is a standard cumulative normal distribution function, and $\tilde{\sigma}^2$ is a noise power. Allocation on the equivalent variable $z$ facilitates implementing equivalent allocation of the calculation power allocation factor $v$.

An optimal solution of the first power factor allocation optimization problem may be determined based on the second power factor allocation optimization problem, the second power factor allocation optimization problem may be determined based on a first-order Taylor expansion of the first power factor allocation optimization problem, and the second power factor allocation optimization problem may be:

$$\min_{\zeta, z, U_1} aU_1 + C_1^{\mathrm{DU}}\Psi_1^{\mathrm{DU}}(\zeta) + C_1^{\mathrm{MU}}\nabla\Psi_1^{\mathrm{MU}}(z^{(n_1)})^T z \quad (8)$$

Herein, $U_1$ is a non-negative auxiliary optimization variable, $\Psi_1^{\mathrm{DU}}(\zeta)$ is a convex function about the communication power factor $\zeta$, $z^{(n1)}$ is a value of the equivalent variable $z$ in the $n_1$th round of algorithm iteration, $\nabla\Psi_1^{\mathrm{MU}}(z^{(n_1)})$ is a gradient constant about $z^{(n1)}$, $C_1^{\mathrm{DU}}$ and $C_1^{\mathrm{MU}}$ are both non-negative constants, and $\alpha$ is a weighting factor of the total expected delay and the total expected energy consumption.

Further, the optimal solution of the first power factor allocation optimization problem may be determined based on an optimal solution of the second power factor allocation optimization problem. The optimal solution of the second power factor allocation optimization problem may include at least one of the following: an optimal solution of the auxiliary optimization variable $U_1$, an optimal solution of the communication power factor $\zeta$, or an optimal solution of the equivalent variable $z$. It should be noted that, when the second transmit power allocation factor optimization problem is solved, a limitation of the first power factor allocation constraint needs to be considered.

The optimal solution of the second power allocation optimization problem may be updated based on an optimal-solution backtracking direction and an optimal-solution backtracking step.

The optimal-solution backtracking direction may be determined based on the following formula:

$$r^{(n_1)} = v^{(n_1)} - v^{(n_1-1)} \quad (9)$$

Herein, $r^{(n1)}$ is the backtracking direction, $v^{(n1)}$ is an optimal solution of the $n_1$th round of algorithm iteration, and $v^{(n1-1)}$ is an optimal solution of the $(n_1\text{-}1)$th round of algorithm iteration. The optimal-solution backtracking direction can be used to eliminate an error caused due to Taylor expansion.

The optimal-solution backtracking step may be determined based on the following formula:

$$s = b^{l_1}s \quad (10)$$

Herein, $s$ is the optimal-solution backtracking step, $b$ is an attenuation coefficient greater than 0 and less than 1, and $l_1$ is a quantity of backtracking times. It should be noted that the $n_1$th round of algorithm iteration may include several times of backtracking, that is, $l_1$ is a non-negative integer greater than or equal to 1.

The optimal solution of the second power allocation optimization problem may be updated based on the following formula:

$$v^{(n_1)} = sr^{(n_1)} + v^{(n_1-1)} \quad (11)$$

Herein, $v^{(n1)}$ is the optimal solution of the $n_1$th round of algorithm iteration, $s$ is the optimal-solution backtracking step, $r^{(n1)}$ is the backtracking direction, and $v^{(n1-1)}$ is the optimal solution of the $(n_1\text{-}1)$th round of algorithm iteration.

Update completion of the optimal solution of the second power allocation optimization problem may be determined based on at least one of the following conditions: that the first power factor allocation optimization problem is target non-growth, where the target non-growth may be determined based on a case in which a target value of the first power factor allocation optimization problem in the $n_1^{th}$ round of algorithm iteration is not greater than a target value of the first power factor allocation optimization problem in the $(n_1 - 1)^{th}$ round of algorithm iteration; or that the optimal solution is feasible, where that the optimal solution is feasible may be determined based on a case in which an updated optimal solution does not violate the first power factor allocation constraint.

Further, the update completion of the optimal solution of the second power allocation optimization problem may be further determined based on target convergence of the first power factor allocation optimization problem, and the target convergence is determined based on a case in which an absolute value of a difference between the target value of the first power factor allocation optimization problem in the $n_1^{th}$ round of algorithm iteration and the target value of the first power factor allocation optimization problem in the $(n_1 - 1)^{th}$ round of algorithm iteration is not greater than a preset threshold.

The calculation power factor may be determined based on an inverse variable substitution of the equivalent variable of the calculation power factor, and the inverse variable substitution is determined based on the following formula:

$$\upsilon = K^2 \tilde{\sigma}^2 / [K^2 \gamma - 2K - \sqrt{3K} \Phi^{-1}(1/z)] \qquad (12)$$

Herein, $\upsilon$ is the calculation power factor, $K$ is the quantity of second devices, $\gamma$ is the threshold of the mean square error value of the calculation result of the first-type data, $\tilde{\sigma}^2$ is the noise power, $\Phi$ is the standard cumulative normal distribution function, and $z$ is an equivalent variable of $\upsilon$.

In some implementations, as shown in FIG. 9, the method shown in this embodiment of the present application may further include step S920. In step S920, the first device determines whether calculation of the first-type data is completed, and/or whether communication of the second-type data is completed.

Whether calculation of the first-type data is completed may be determined based on a case in which the one or more second devices complete transmission of the first-type data on the first frequency band. For example, when the first device receives the last data packet of the first-type data, the first device may determine that each second device completes transmission of the first-type data on the first frequency band. The last data packet of the first-type data may be determined based on a termination indication in the data packet. For example, the last data packet may include a bit used to indicate termination.

Further, if calculation of the first-type data is not completed, the first device may transmit the initial transmission request of the first-type data to the one or more second devices.

Whether communication of the second-type data is completed may be determined based on a case in which the one or more second devices separately complete transmission of the second-type data on the second frequency band. For example, when the first device receives the last data packet of second-type data of each second device, the first device may determine that each second device completes transmission of the second-type data on the second frequency band. The last data packet of the second-type data may be determined based on a termination indication in the data packet. For example, the last data packet may include a bit used to indicate termination.

Further, if communication of the second-type data is not completed, the first device may transmit an initial transmission request of second-type data to a second device that has not completed communication.

In some implementations, as shown in FIG. 10, before the first device receives the calculation result of the first-type data of the one or more second devices and/or the second-type data of the one or more second devices, the method in this embodiment of the present application may further include step S1000. In step S1000, the first device transmits a first frequency band allocation scheme to the one or more second devices, where the first frequency band allocation scheme may be used for determining the first frequency band and the second frequency band. In other words, before the second device transmits the first-type data and/or the second-type data, the first device may indicate the first frequency band allocation scheme to the second device. This facilitates the second device in determining the first frequency band and the second frequency band.

A wireless communication method provided in embodiments of the present application is described below with reference to FIG. 11 to FIG. 14. The first-type data may be type-A data, and the second-type data may be type-B data. The first frequency band may be a frequency band 0, and the second frequency band may be a frequency band 1 to a frequency band K, where K is an integer greater than or equal to 2. In addition, the frequency band 0 and the frequency band 1 to the frequency band K may be orthogonal. For ease of understanding, in the following, a "receive-end device" is used to represent the first device, and a "transmit-end device" is used to represent the second device. For example, one receive-end device and K transmit-end devices form a communication-calculation integrated architecture. For example, a procedure of the wireless communication method in this embodiment of the present application is referred to as a "fast channel fluctuation-resistant communication-calculation integrated architecture working procedure".

For example, a transmission process of the type-A/B data may be shown in FIG. 11. The transmit-end devices transmit type-A data of the transmit-end devices to the receive-end device on the frequency band 0. After channel superposition on the frequency band 0, the receive-end device may receive a calculation results of the type-A data of the transmit-end devices. The transmit-end devices separately transmit type-B data of the transmit-end devices to the receive-end device on the frequency band 1 to the frequency band K.

As described above, before each transmit-end device transmits type-A/B data, the receive-end device may determine a calculation power factor/communication power factor and indicate the calculation power factor/communication power factor to each transmit-end device. For example, a process in which the receive-end device determines the calculation power factor/communication power factor may be shown in FIG. 12, and includes steps S1201 to S1211.

Step S1201: Giving initial feasible power allocation factors.

Specifically, any transmit-end device described above has two power allocation factors, that is, a calculation power allocation factor and a communication power allocation factor. The feasibility is for a first power factor allocation optimization problem. For the first power factor allocation optimization problem, reference may be made to Formula (3) above.

Further, the first power factor allocation optimization problem has a first power factor allocation constraint, and the first power factor allocation constraint may be described in Formulas (4) to (6) above. It may be understood that the initial feasible power allocation factors mean a calculation power factor and a communication power factor that satisfy the first power factor allocation constraint.

Step S1202: Performing variable substitution on the calculation power allocation factor. Content of performing variable substitution on the calculation power allocation factor may be described in Formula (7) above. It may be understood that equivalent allocation of the calculation power allocation factor can be implemented through allocation on an equivalent variable.

Step S1203: Performing first-order Taylor expansion on the first power factor allocation optimization problem.

Specifically, after the first-order Taylor expansion of the first power factor allocation optimization problem, a second power factor allocation optimization problem shown in Formula (8) is obtained.

Step S1204: Solving the second power allocation factor optimization problem to obtain an optimal solution.

The optimal solution includes a non-negative auxiliary optimization variable, a communication power factor, and an equivalent variable. It should be noted that, when the second power allocation factor optimization problem is solved, a limitation of the first power factor allocation constraint needs to be considered.

Step S1205: Calculating an optimal-solution backtracking direction.

Specifically, a method for calculating the backtracking direction may be shown in Formula (9) above.

It should be noted that the purpose of calculating the optimal-solution backtracking direction is to eliminate an error caused due to Taylor expansion.

Step S1206: Attenuating an optimal-solution backtracking step.

Specifically, a method for attenuating the optimal-solution backtracking step is shown in Formula (10) above.

Step S1207: Updating the optimal solution by using the optimal-solution backtracking direction and the optimal-solution backtracking step.

Specifically, a method for updating the optimal solution is described as Formula (11) above. Details are not described herein again.

Step S1208: Determining whether the first power factor allocation optimization problem is target non-growth and whether the optimal solution is feasible.

Specifically, the target non-growth and the feasibility of the optimal solution may be determined based on the method described above.

If yes, step S1209 is performed. If not, step S1206 is performed.

Step S1209: Determining whether the first power factor allocation optimization problem reaches target convergence.

Specifically, the target convergence of the first power factor allocation optimization problem may be determined based on the method described above.

If the convergence is reached, step S1210 is performed. If the convergence is not reached, step S1203 is performed.

Step S1210: Performing inverse variable substitution on the calculation power allocation factor.

Specifically, the inverse variable substitution may be shown in Formula (12) above.

It may be understood that an optimized equivalent variable may be converted back to the calculation power allocation factor through inverse variable substitution.

Step S1211: Ending a transmit power factor allocation algorithm, and outputting a calculation power factor and communication power factor allocation scheme.

Embodiment 1

As shown in FIG. 13, a wireless communication method shown in Embodiment 1 may include steps S131 to S135.

Step S131: A receive-end device notifies all transmit-end devices of a frequency band 0 of calculation type-A data and frequency bands 1 to K of communication type-B data.

In particular, for simplicity, bandwidths of frequency bands in this embodiment are considered to be equal. However, in actual deployment, the frequency bands may have different bandwidths. This is not specifically limited in this embodiment.

Step S132: A transmit-end device $k$ transmits the type-A data to the receive-end device on the frequency band 0, and transmits the type-B data to the receive-end device on a frequency band $k$.

The transmit-end device $k$ uses the foregoing time slice as a basic transmission unit. A fixed quantity of data segments are transmitted in each time slice. It should be noted that the transmit-end device $k$ separately carries initially transmitted type-A or type-B data by using an initial calculation process time slice or an initial communication process time slice, and the transmit-end device $k$ separately carries retransmitted type-A or type-B data by using a retransmission calculation process time slice or a retransmission communication process time slice.

Step S133: The receive-end device determines whether data on each frequency band satisfies a determining condition.

It should be noted that the step determining process includes step S13310 to step S1331K and step S13320 to step S1332K.

It should be noted that there is a parallel execution relationship among step S13310 to step S1331K, and there is a parallel execution relationship among step S13320 to step S1332K.

The following further describes steps included in step S133.

Step S13310: Determining whether a calculation result of the type-A data satisfies.

When it is determined whether the calculation result of the type-A data satisfies a preset calculation quality determining condition, a mean square error value, obtained after calculation, of the type-A data may be used as the calculation quality determining condition.

If the calculation quality determining condition is satisfied, the receive end reserves the calculation result of the type-A data carried in the initial calculation process time slice or the retransmission calculation process time slice.

If the calculation quality determining condition is not satisfied, the receive end discards the calculation result of the type-A data carried in the initial calculation process time slice or the retransmission calculation process time slice, and initiates a retransmission request to all the transmit-end devices.

Step S13311 to step S1331K: Determining whether the type-B data of the transmit-end devices 1 to K satisfies.

When it is determined whether communication quality of the type-B data satisfies a preset communication quality determining condition, a data rate of the type-B data of the transmit-end device may be used as the communication quality determining condition.

If the communication quality determining condition is satisfied, the receive end reserves a calculation result of type-B data, carried in the initial communication process time slice or the retransmission communication process time slice, of the transmit-end device $k$.

If the communication quality determining condition is not satisfied, the receive end discards a calculation result of type-B data, carried in the initial communication process time slice or the retransmission communication process time slice, of the transmit-end device $k$, and transmits a retransmission request to the transmit-end device $k$.

Step S13320: The receive-end device initiates a retransmission request of the type-A data to all the transmit-end devices.

Step S13321 to step S1332K: The receive-end device initiates a retransmission request of the type-B data to the transmit-end devices 1 to K.

Step S134: The receive-end device receives the calculation result of the type-A data on the frequency band 0, and simultaneously receives the type-B data on the frequency bands 1 to K.

Specifically, the receive-end device receives and stores the calculation result, satisfying the calculation quality determining condition, of the type-A data, and performs step S13410 to determine whether calculation of the type-A data of all the transmit ends is completed. The receive-end device receives and stores the type-B data, satisfying the communication quality determining condition, of the transmit-end device 1 to the transmit-end device K, and separately performs steps S13411 to S1341K to determine whether communication of the type-B data of all the transmit ends is completed.

The determining process may include step S13410 to step S1341K and step S13420 to step S1342K.

It should be noted that there is a parallel execution relationship among step S13410 to step S1341K, and there is a parallel execution relationship among step S13420 to step S1342K.

The following further describes steps included in the determining process.

Step S13410: Determining whether calculation of the type-A data is completed.

A condition for determining completion of the calculation of the type-A data is that all the transmit-end devices successfully calculate all the type-A data of the transmit-end devices on the frequency band 0 by using an over-the-air computation technology.

Step S13411 to step S1341K: Determining whether the type-B data of the transmit-end devices 1 to K is completed.

A determining standard of completion of communication of the type-B data of the transmit-end device *k* is that the transmit-end device *k* successfully communicates all the type-B data of the transmit-end device *k* by using a digital communications technology based on orthogonal multiple-access on the frequency band *k*.

Step S13420: The receive-end device initiates an initial transmission request of the type-A data to all the transmit-end devices.

It should be noted that the initial transmission request of the type-A data means that all the transmit-end devices transmit type-A data that has not been calculated.

Step S13421 to step S1342K: The receive-end device initiates an initial transmission request of the type-B data to the transmit-end devices 1 to K.

It should be noted that the initial transmission request of the type-B data instructs the transmit-end devices 1 to K to transmit the type-B data that has not been communicated.

Step S135: Ending a fast channel fluctuation-resistant communication-calculation integrated architecture working procedure.

Specifically, when calculation of the type-A data of all the transmit-end devices is completed and communication of the type-B data of all the transmit-end devices is completed, the receive-end device ends the communication-calculation integrated architecture working procedure, and communication and calculation tasks are completed.

Embodiment 2

As shown in FIG. 14, Embodiment 2 shows an application example of a wireless communication method in a semi-federated learning scenario according to an embodiment of the present application. In the semi-federated learning scenario, a main task of a semi-federated learning framework is to jointly train a shared global model by mixing federated learning between transmit-end devices and centralized learning of a base station under coordination of the base station.

The following describes in detail how to use and implement a communication-calculation integrated process in this scenario.

Each transmit-end device transmits a federated learning model parameter of the transmit-end device on a frequency band 0 as type-A data. Aggregation of the federated learning model parameters is implemented through over-the-air computation.

In addition, the transmit-end devices each use a part of local data of the transmit-end devices as type-B data, and separately communicate with the base station by using orthogonal frequency bands 1 to K.

In addition, to cope with fast fluctuation of a radio channel, the receive-end device may transmit a retransmission request of the federated learning model parameter or the local data to the transmit-end device when the federated learning model parameter or the local data does not satisfy an expected quality determining condition. Based on the retransmission request, the transmit-end devices may separately retransmit, on the frequency band 0 and the frequency band 1 to the frequency band K, the federated learning model parameters and the local data that do not satisfy the quality determining condition.

It should be noted that a communication process on the frequency band 1 to the frequency band K may also be used reversely. Specifically, the base station may separately broadcast a trained global model to the transmit-end devices by using the frequency band 1 to the frequency band K at the same time.

Based on the wireless communication method in this embodiment of the present application, a delay in a communication-calculation integrated process in a semi-federated learning scenario can be effectively reduced, a frequency band resource can be saved, and resistance to channel fluctuation can be improved, thereby reducing an overall expected energy consumption.

Embodiment 3

Embodiment 3 shows an application example of a wireless communication method in an emergency rescue scenario according to an embodiment of the present application. In the emergency rescue scenario, a receive-end device lacks awareness of environment information of a target region due to disasters and damages, thus hindering the deployment of an emergency rescue task. To obtain real-time environment information of the target region, a plurality of unmanned aerial vehicles (transmit-end devices) may be deployed for coordinated detection. For example, as shown in FIG. 15, one unmanned aerial vehicle with a relatively strong communication capability is used as a receive-end device and is in a fixed location, and the remaining K unmanned aerial vehicles with relatively weak communication capabilities are used as transmit-end devices and are distributed in various corners of the target region.

The following describes in detail how to use and implement a communication-calculation integrated process in this scenario.

In one aspect, each transmit-end device continuously collects, as type-A data, environment information, such as image information, and passes back the environment information to the receive-end device on a frequency band 0. Based on over-the-air computation, the receive end directly receives superposed environment information from the frequency band 0. It should be noted that the superposed environment information facilitates the receive-end device in obtaining more environment features under same calculation overheads.

In another aspect, the transmit-end devices continuously feed back running status information of the transmit-end devices, such as location information and power information (that is, type-B data), to the receive-end device by using the orthogonal frequency bands 1 to K. This facilitates the receive-end device in mastering each transmit end, to make decision adjustment. It should be noted that the decision adjustment solution exceeds the scope of this embodiment of the present invention, and therefore is not described and limited.

It should be noted that a communication process on the frequency band 1 to the frequency band K may also be used reversely. Specifically, the receive-end device may also transmit respective control commands to the transmit-end devices by using the frequency band 1 to the frequency band K at the same time, to adjust running statuses of the transmit-end devices, for example, change locations of the transmit-end devices and adjust battery use statuses.

It should be noted that, to resist impact of a fast fluctuating channel state, the foregoing calculation and communication processes may retransmit data that does not satisfy an expected quality determining condition.

Based on the wireless communication method in this embodiment of the present application, a delay in a communication-calculation integrated process in emergency rescue can be effectively reduced, a frequency band resource can be saved, and resistance to channel fluctuation can be improved, thereby reducing an overall expected energy consumption.

The method embodiments of the present application are described in detail above with reference to FIG. 1 to FIG. 15. Apparatus embodiments of the present application are described in detail below with reference to FIG. 16 to FIG. 18. It should be understood that the description of the method embodiments corresponds to the description of the apparatus embodiments, and therefore, for a part that is not described in detail, reference may be made to the foregoing method embodiments.

FIG. 16 is a schematic diagram of a structure of a communications device according to an embodiment of the present application. The communications device 1600 in FIG. 16 is a first device. The communications device 1600 may include a receiving module 1610. The receiving module 1610 may be configured to receive a calculation result of first-type data of one or more second devices and/or second-type data of one or more second devices, where the first-type data is to-be-calculated data, the first-type data of the one or more second devices is carried on a first frequency band, and the calculation result is determined based on channel superposition of the first frequency band; and the second-type data is non-calculation data, and the second-type data of the one or more second devices is carried on one or more second frequency bands.

In some implementations, the communications device 1600 may further include a first determining module 1620. The first determining module 1620 may be configured to determine, based on whether at least one of the calculation result of the first-type data or the second-type data satisfies a quality determining condition, whether the second device needs to retransmit the first-type data and/or the second-type data. It should be noted that the first determining module may also be referred to as a quality check module.

In some implementations, the communications device 1600 may further include a first transmitting module 1630. The first transmitting module 1630 may be configured to: when the determining module determines that the calculation result of the first-type data does not satisfy the quality determining condition, discard the calculation result of the first-type data, and transmit a retransmission request of the calculation result of the first-type data to the one or more second devices; or the first transmitting module 1630 may be configured to: when the determining module determines that the calculation result of the first-type data satisfies the quality determining condition, keep the calculation result of the first-type data, and transmit an initial transmission request of the calculation result of the first-type data to the one or more second devices. It should be noted that the first transmitting module may also be referred to as a retransmission initiation module.

In some implementations, a calculation process of the first-type data may include a first-type time slice and a second-type time slice, the retransmission request may be used to request the first-type time slice, the first-type time slice may be used to retransmit the calculation result, whose quality does not satisfy the quality determining condition, of the first-type data, the initial transmission request may be used to request the second-type time slice, and the second-type time slice may be used for initially transmitting the calculation result of the first-type data.

In some implementations, the retransmission request or the initial transmission request may be carried on the first frequency band.

In some implementations, the communications device 1600 may further include a second transmitting module 1640. The second transmitting module 1640 may be configured to: when the second-type data does not satisfy the quality determining condition, discard the second-type data, and transmit a retransmission request of the second-type data to the second device that transmits the second-type data; or the second transmitting module 1640 may be configured to: when quality of the second-type data satisfies the quality determining condition, keep the second-type data, and transmit an initial transmission request of the second-type data to the second device that transmits the second-type data. It should be noted that the second transmitting module may also be referred to as a retransmission initiation module.

In some implementations, a calculation process of the second-type data may include a first-type time slice and a second-type time slice, the retransmission request may be used to request the first-type time slice, the first-type time slice may be used to retransmit the second-type data whose quality does not satisfy the quality determining condition, the initial transmission request may be used to request the second-type time slice, and the second-type time slice may be used for initially transmitting the second-type data.

In some implementations, the retransmission request or the initial transmission request may be carried on the second frequency band.

In some implementations, the quality determining condition of the calculation result of the first-type data may be that a mean square error value of the calculation result of the first-type data is less than a preset threshold.

In some implementations, the mean square error value of the calculation result of the first-type data may be determined based on the following formula:

$$MSE = \sum_{k=1}^{K} q_k^2 \mid v^H h_k - 1 \mid^2 + \frac{\tilde{\sigma}^2}{v}.$$

Herein, $MSE$ is the mean square error value of the calculation result of the first-type data, $q_k$ is an over-the-air computation weight of the second device $k$, $v$ is a beamforming vector used by the first device to receive the calculation result of the first-type data, $v$ is a normalization factor used by the first device to receive the calculation result of the first-type data, $h_k$ is a channel state vector from the second device $k$ to the first device, and $\tilde{\sigma}^2$ is a noise power.

In some implementations, the quality determining condition of the second-type data may be that a data rate of the second-type data is greater than or equal to a preset threshold.

In some implementations, the data rate of the second-type data may be determined based on the following formula:

$$R_k = B^D \, log_2 \left( 1 + \frac{\zeta |b^H h_k|^2}{\tilde{\sigma}^2} \right).$$

Herein, $R_k$ is the data rate, $B^D$ is a bandwidth that is used for completing communication of the second-type data, $b$ is a beamforming vector that is used by the first device to receive the second-type data, and $\zeta$ is a normalization factor that is used by the first device to receive the second-type data.

In some implementations, the communications device 1600 may further include a third transmitting module 1650. The third transmitting module 1650 may be configured to: before the receiving module 1610 receives the calculation result of the first-type data of the one or more second devices and/or the second-type data of the one or more second devices, transmit a first power factor allocation scheme to the one or more second devices, where the first power factor allocation scheme may be used for determining a calculation power factor and/or a communication power factor, the calculation power factor is a transmit power of the first-type data on the first frequency band, and the communication power factor is a transmit power of the second-type data on the second frequency band. Further, the communications device 1600 may further include a power optimization module 1660. The power optimization module 1660 may be configured to determine the first power factor allocation scheme.

In some implementations, the first power factor allocation scheme may be determined based on the first power factor allocation optimization problem, and the first power factor allocation optimization problem may be:

$$\min_{\zeta, v} T^{\mathrm{ALL}} + (1 - \alpha) E^{\mathrm{ALL}}.$$

Herein, $v$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of first-type data and/or the communication process of the second-type data, $\alpha$ constant greater than 0 and less than 1, and $\alpha$ is a weighting factor of the total expected delay and the total expected energy consumption.

In some implementations, the first power factor allocation optimization problem may have a first power factor allocation constraint, and the first power factor allocation constraint may be related to a plurality of following factors: a minimum calculation success probability correlation of the first-type data, a path loss value of the second device, a maximum transmit power and a minimum transmit power that can be used by the second device for calculation or communication, or a minimum calculation success probability of the first-type data. For example, the first power factor allocation constraint may be:

$$\zeta \in [C_3^{DU}, \beta_{min}\hat{p}_{max}];$$

$$\zeta \in [0, \beta_{min}\hat{p}_{min}];$$

and

$$P^A \in [P_{min}^A, 1].$$

Herein, $C_3^{DU}$ is a non-negative constant, $C_3^{DU}$ is related to a minimum calculation success probability of the first-type data, $\beta_{min}$ is a minimum path loss value of each second device, $\hat{p}_{max}$ is a maximum transmit power that may be used by each second device for calculation or communication, $\hat{p}_{min}$ is a minimum transmit power that may be used by each second device for calculation or communication, and $P_{min}^A$ is a minimum calculation success probability of the first-type data.

In some implementations, the first power factor allocation optimization problem may be solved based on an equivalent variable of the calculation power factor, and the equivalent variable of the calculation power factor may be determined based on the following formula:

$$z = \frac{1}{\Phi\left[(K^2\gamma - 2K - K^2\tilde{\sigma}^2/\upsilon)/\sqrt{3K}\right]}.$$

Herein, $z$ is the equivalent variable obtained after variable substitution of the calculation power allocation factor $\upsilon$, $K$ is a quantity of second devices, $\gamma$ is a threshold of a mean square error value of the calculation result of the first-type data, $\Phi$ is a standard cumulative normal distribution function, and $\tilde{\sigma}^2$ is a noise power.

In some implementations, an optimal solution of the first power factor allocation optimization problem may be determined based on the second power factor allocation optimization problem, the second power factor allocation optimization problem may be determined based on a first-order Taylor expansion of the first power factor allocation optimization problem, and the second power factor allocation optimization problem may be:

$$\min_{\zeta, z, U_1} aU_1 + C_1^{DU}\Psi_1^{DU}(\zeta) + C_1^{MU}\nabla\Psi_1^{MU}(z^{(n_1)})^T z.$$

Herein, $U_1$ is a non-negative auxiliary optimization variable, $\Psi_1^{DU}(\zeta)$ is a convex function about the communication power factor $\zeta$, $z^{(n1)}$ is a value of the equivalent variable $z$ in the $n_1$th round of algorithm iteration, $\nabla\Psi_1^{MU}(z^{(n_1)})$ is a gradient constant about $z^{(n1)}$, $C_1^{DU}$ and $C_1^{MU}$ are both non-negative constants, and $\alpha$ is a weighting factor of the total expected delay and the total expected energy consumption.

In some implementations, the optimal solution of the first power factor allocation optimization problem may be determined based on an optimal solution of the second power factor allocation optimization problem.

In some implementations, the optimal solution of the second power factor allocation optimization problem may include at least one of the following: an optimal solution of the auxiliary optimization variable $U_1$, an optimal solution of the communication power factor $\zeta$, or an optimal solution of the equivalent variable $z$.

In some implementations, the optimal solution of the second power allocation optimization problem may be updated based on an optimal-solution backtracking direction and an optimal-solution backtracking step.

In some implementations, the optimal-solution backtracking direction may be determined based on the following formula:

$$r^{(n_1)} = \upsilon^{(n_1)} - \upsilon^{(n_1-1)}.$$

Herein, $r^{(n1)}$ is the backtracking direction, $\upsilon^{(n1)}$ is an optimal solution of the $n_1$th round of algorithm iteration, and $\upsilon^{(n1-1)}$ is an optimal solution of the $(n_1-1)$th round of algorithm iteration.

In some implementations, the optimal-solution backtracking step may be determined based on the following formula:

$$s = b^{l_1}s.$$

Herein, $s$ is the optimal-solution backtracking step, $b$ is an attenuation coefficient greater than 0 and less than 1, $l_1$ is a quantity of backtracking times, and $l_1$ is a non-negative integer greater than or equal to 1.

In some implementations, the optimal solution of the second power allocation optimization problem may be updated based on the following formula:

$$\boldsymbol{v}^{(n_1)} = s\boldsymbol{r}^{(n_1)} + \boldsymbol{v}^{(n_1-1)}.$$

Herein, $v^{(n1)}$ is the optimal solution of the $n_1$th round of algorithm iteration, $s$ is the optimal-solution backtracking step, $r^{(n1)}$ is the backtracking direction, and $v^{(n1-1)}$ is the optimal solution of the $(n_1-1)$th round of algorithm iteration.

In some implementations, update completion of the optimal solution may be determined based on at least one of the following conditions: that the first power factor allocation optimization problem is target non-growth, where the target non-growth may be determined based on a case in which a target value of the first power factor allocation optimization problem in the $n_1$th round of algorithm iteration is not greater than a target value of the first power factor allocation optimization problem in the $(n_1 - 1)$th round of algorithm iteration; or that the optimal solution is feasible, where that the optimal solution is feasible may be determined based on a case in which an updated optimal solution does not violate the first power factor allocation constraint.

In some implementations, the update completion of the optimal solution may be further determined based on target convergence of the first power factor allocation optimization problem, and the target convergence is determined based on a case in which an absolute value of a difference between the target value of the first power factor allocation optimization problem in the $n_1$th round of algorithm iteration and the target value of the first power factor allocation optimization problem in the $(n_1 - 1)$th round of algorithm iteration is not greater than a preset threshold.

In some implementations, the calculation power factor may be determined based on an inverse variable substitution of the equivalent variable of the calculation power factor, and the inverse variable substitution may be determined based on the following formula:

$$\upsilon = K^2\tilde{\sigma}^2/[K^2\gamma - 2K - \sqrt{3K}\Phi^{-1}(1/z)].$$

Herein, $\upsilon$ is the calculation power factor, $K$ is the quantity of second devices, $\gamma$ is the threshold of the mean square error value of the calculation result of the first-type data, $\tilde{\sigma}^2$ is the noise power, $\Phi$ is the standard cumulative normal distribution function, and $z$ is an equivalent variable of $\upsilon$.

In some implementations, the communications device 1600 may further include a second determining module 1670. The second determining module 1670 may be configured to determine whether calculation of the first-type data is completed, and/or whether communication of the second-type data is completed.

In some implementations, whether calculation of the first-type data is completed may be determined based on a case in which the one or more second devices complete transmission of the first-type data on the first frequency band.

In some implementations, the communications device further includes a fourth transmitting module 1680. The fourth transmitting module 1680 may be configured to: when calculation of the first-type data is not completed, transmit an initial transmission request of the first-type data to the one or more second devices.

In some implementations, whether communication of the second-type data is completed may be determined based on a case in which the one or more second devices separately complete transmission of the second-type data on the second frequency band.

In some implementations, the communications device further includes a fifth transmitting module 1690. The fifth transmitting module 1690 may be configured to: when communication of the second-type data is not completed, transmit an initial transmission request of the second-type data to the second device that does not complete the communication.

In some implementations, the communications device 1600 may further include a fourth transmitting module 1680. The fourth transmitting module 1680 may be configured to: before the receiving module 1610 receives the first-type data and/or the second-type data transmitted by the one or more second devices, transmit a first frequency band allocation scheme to the one or more second devices, where the first frequency band allocation scheme is used for determining the first frequency band and the second frequency band.

In some implementations, the first frequency band and the plurality of second frequency bands are orthogonal.

FIG. 17 is a schematic diagram of a structure of a communications device 1700 according to another embodiment of the present application. The communications device 1700 shown in FIG. 17 is a second device. The communications device 1700 may include a transmitting module 1710. The transmitting module 1710 may be configured to transmit first-type data and/or second-type data to a first device, where the first-type data may be to-be-calculated data, the first-type data may be carried on a first frequency band, and calculation of the first-type data may be implemented based on channel superposition of the first frequency band; and the second-type data may be non-calculation data, and the second-type data may be carried on a second frequency band.

In some implementations, the communications device 1700 may further include a first receiving module 1720. The first receiving module 1720 may be configured to: when a calculation result of the first-type data does not satisfy a quality determining condition, receive a retransmission request, transmitted by the first device, of the calculation result of the first-type data; or the first receiving module 1720 may be configured to: when a calculation result of the first-type data satisfies a quality determining condition, receive an initial transmission request, transmitted by the first device, of the calculation result of the first-type data.

In some implementations, a calculation process of the first-type data may include a first-type time slice and a second-type time slice, the retransmission request of the first-type data may be used to request the first-type time slice, the first-type time slice may be used to retransmit the calculation result, whose quality does not satisfy the quality determining condition, of the first-type data, the initial transmission request of the first-type data may be used to request the second-type time slice, and the second-type time slice may be used for initially transmitting the calculation result of the first-type data.

In some implementations, the retransmission request or the initial transmission request of the first-type data may be carried on the first frequency band.

In some implementations, the communications device 1700 may further include a second receiving module 1730. The second receiving module 1730 may be configured to: when the second-type data does not satisfy a quality determining condition, receive a retransmission request, transmitted by the first device, of the second-type data; or the second receiving module 1730 may be configured to: when quality of the second-type data satisfies a quality determining condition, receive an initial transmission request, transmitted by the first device, of the second-type data.

In some implementations, a calculation process of the second-type data may include a first-type time slice and a second-type time slice, the retransmission request of the second-type data may be used to request the first-type time slice, the first-type time slice may be used to retransmit the second-type data whose quality does not satisfy the quality determining condition, the initial transmission request of the second-type data may be used to request the second-type time slice, and the second-type time slice may be used for initially transmitting the second-type data.

In some implementations, the retransmission request or the initial transmission request of the second-type data may be carried on the second frequency band.

In some implementations, the quality determining condition of the calculation result of the first-type data may be that a mean square error value of the calculation result of the first-type data is less than a preset threshold.

In some implementations, the mean square error value of the calculation result of the first-type data may be determined based on the following formula:

$$MSE = \sum_{k=1}^{K} q_k^2 \, | \, v^H h_k - 1 |^2 + \frac{\tilde{\sigma}^2}{v} .$$

Herein, $MSE$ is the mean square error value of the calculation result of the first-type data, $q_k$ is an over-the-air computation weight of the second device $k$, $v$ is a beamforming vector used by the first device to receive the calculation result of the first-type data, $v$ is a normalization factor used by the first device to receive the calculation result of the first-type data, $h_k$ is a channel state vector from the second device $k$ to the first device, and $\tilde{\sigma}^2$ is a noise power.

In some implementations, the quality determining condition of the second-type data may be that a data rate of the second-type data is greater than or equal to a preset threshold.

In some implementations, the data rate of the second-type data may be determined based on the following formula:

$$R_k = B^D \, log_2 \left( 1 + \frac{\zeta | b^H h_k |^2}{\tilde{\sigma}^2} \right).$$

Herein, $R_k$ is the data rate, $B^D$ is a bandwidth that is used for completing communication of the second-type data, $b$ is a beamforming vector that is used by the first device to receive the second-type data, and $\zeta$ is a normalization factor that is used by the first device to receive the second-type data.

Further, the communications device 1700 may further include a retransmission execution module 1740. The retransmission execution module 1740 may be configured to retransmit the first-type data or the second-type data that does not satisfy the quality determining condition.

In some implementations, the communications device 1700 may further include a third receiving module 1750. The third receiving module 1750 may be configured to: before the transmitting module 1710 transmits the first-type data and/or the second-type data to the first device, receive a first power factor allocation scheme transmitted by the first device, where the first power factor allocation scheme is used for determining a calculation power factor and/or a communication power factor, the calculation power factor is a transmit power of the first-type data on the first frequency band, and the communication power factor is a transmit power of the second-type data on the second frequency band. Further, the communications device 1700 may further include a power allocation module 1760. The power allocation module 1760 may be configured to configure a calculation power factor and/or a communication power factor based on the first power factor allocation scheme.

In some implementations, the first power factor allocation scheme may be determined based on the first power factor allocation optimization problem, and the first power factor allocation optimization problem is:

$$\min_{\zeta,\upsilon} T^{\mathrm{ALL}} + (1-\alpha)E^{\mathrm{ALL}}.$$

Herein, $\upsilon$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of first-type data and/or the communication process of the second-type data, $\alpha$ constant greater than 0 and less than 1, and $\alpha$ is a weighting factor of the total expected delay and the total expected energy consumption.

In some implementations, the first power factor allocation optimization problem may have a first power factor allocation constraint, and the first power factor allocation constraint may be related to a plurality of following factors: a minimum calculation success probability correlation of the first-type data, a path loss value of the second device, a maximum transmit power and a minimum transmit power that can be used by the second device for calculation or communication, or a minimum calculation success probability of the first-type data. For example, the first power factor allocation constraint may be:

$$\zeta \in [C_3^{DU}, \beta_{min}\hat{p}_{max}];$$

$$\zeta \in [0, \beta_{min}\hat{p}_{min}];$$

and

$$P^A \in [P_{min}^A, 1].$$

Herein, $C_3^{DU}$ is a non-negative constant, $C_3^{DU}$ is related to a minimum calculation success probability of the first-type data, $\beta_{min}$ is a minimum path loss value of each second device, $\hat{p}_{max}$ is a maximum transmit power that may be used by each second device for calculation or communication, $\hat{p}_{min}$ is a minimum transmit power that may be used by each second device for calculation or communication, and $P_{min}^A$ is a minimum calculation success probability of the first-type data.

In some implementations, the first power factor allocation optimization problem may be solved based on an equivalent variable of the calculation power factor, and the equivalent variable of the calculation power factor may be determined based on the following formula:

$$z = \frac{1}{\Phi\left[(K^2\gamma - 2K - K^2\tilde{\sigma}^2/\upsilon)/\sqrt{3K}\right]}.$$

Herein, $z$ is the equivalent variable obtained after variable substitution of the calculation power allocation factor $\upsilon$, $K$ is a quantity of second devices, $\gamma$ is a threshold of a mean square error value of the calculation result of the first-type data, $\Phi$ is a standard cumulative normal distribution function, and $\tilde{\sigma}^2$ is a noise power.

In some implementations, an optimal solution of the first power factor allocation optimization problem may be determined based on the second power factor allocation optimization problem, the second power factor allocation optimization problem may be determined based on a first-order Taylor expansion of the first power factor allocation optimization problem, and the second power factor allocation optimization problem may be:

$$\min_{\zeta,z,U_1} aU_1 + C_1^{\mathrm{DU}}\Psi_1^{\mathrm{DU}}(\zeta) + C_1^{\mathrm{MU}}\nabla\Psi_1^{\mathrm{MU}}(z^{(n_1)})^T z.$$

Herein, $U_1$ is a non-negative auxiliary optimization variable, $\Psi_1^{\mathrm{DU}}(\zeta)$ is a convex function about the communication power factor $\zeta$, $z^{(n1)}$ is a value of the equivalent variable $z$ in the $n_1^{\text{th}}$ round of algorithm iteration, $\nabla\Psi_1^{\mathrm{MU}}(z^{(n_1)})$ is a gradient constant about $z^{(n1)}$, $C_1^{\mathrm{DU}}$ and $C_1^{\mathrm{MU}}$ are both non-negative constants, and $\alpha$ is a weighting factor of the total expected delay and the total expected energy consumption.

In some implementations, the optimal solution of the first power factor allocation optimization problem may be determined based on an optimal solution of the second power factor allocation optimization problem.

In some implementations, the optimal solution of the second power factor allocation optimization problem may include at least one of the following: an optimal solution of the auxiliary optimization variable $U_1$, an optimal solution of the communication power factor $\zeta$, or an optimal solution of the equivalent variable $z$.

In some implementations, the optimal solution of the second power allocation optimization problem may be updated based on an optimal-solution backtracking direction and an optimal-solution backtracking step.

In some implementations, the optimal-solution backtracking direction may be determined based on the following formula:

$$\boldsymbol{r}^{(n_1)} = \boldsymbol{v}^{(n_1)} - \boldsymbol{v}^{(n_1-1)}.$$

Herein, $r^{(n1)}$ is the backtracking direction, $v^{(n1)}$ is an optimal solution of the $n_1^{\text{th}}$ round of algorithm iteration, and $v^{(n1-1)}$ is an optimal solution of the $(n_1-1)^{\text{th}}$ round of algorithm iteration.

In some implementations, the optimal-solution backtracking step may be determined based on the following formula:

$$s = b^{l_1}s.$$

Herein, s is the optimal-solution backtracking step, $b$ is an attenuation coefficient greater than 0 and less than 1, $l_1$ is a quantity of backtracking times, and $l_1$ is a non-negative integer greater than or equal to 1.

In some implementations, the optimal solution of the second power allocation optimization problem may be updated based on the following formula:

$$\boldsymbol{v}^{(n_1)} = s\boldsymbol{r}^{(n_1)} + \boldsymbol{v}^{(n_1-1)}.$$

Herein, $v^{(n1)}$ is the optimal solution of the $n_1^{\text{th}}$ round of algorithm iteration, s is the optimal-solution backtracking step, $r^{(n1)}$ is the backtracking direction, and $v^{(n1-1)}$ is the optimal solution of the $(n_1-1)^{\text{th}}$ round of algorithm iteration.

In some implementations, update completion of the optimal solution may be determined based on at least one of the following conditions: that the first power factor allocation optimization problem is target non-growth, where the target non-growth may be determined based on a case in which a target value of the first power factor allocation optimization problem in the $n_1^{\text{th}}$ round of algorithm iteration is not greater than a target value of the first power factor allocation optimization problem in the $(n_1 - 1)^{\text{th}}$ round of algorithm iteration; or that the optimal solution is feasible, where that the optimal solution is feasible may be determined based on a case in which an updated optimal solution does not violate the first power factor allocation constraint.

In some implementations, the update completion of the optimal solution may be further determined based on target convergence of the first power factor allocation optimization problem, and the target convergence is determined based on a case in which an absolute value of a difference between the target value of the first power factor allocation optimization problem in the $n_1^{\text{th}}$ round of algorithm iteration and the target value of the first power factor allocation optimization problem in the $(n_1 - 1)^{\text{th}}$ round of algorithm iteration is not greater than a preset threshold.

In some implementations, the calculation power factor may be determined based on an inverse variable substitution of the equivalent variable of the calculation power factor, and the inverse variable substitution is determined based on the following formula:

$$\upsilon = K^2\tilde{\sigma}^2/[K^2\gamma - 2K - \sqrt{3K}\Phi^{-1}(1/z)].$$

Herein, $\upsilon$ is the calculation power factor, $K$ is the quantity of second devices, $\gamma$ is the threshold of the mean square error value of the calculation result of the first-type data, $\tilde{\sigma}^2$ is the noise power, $\Phi$ is the standard cumulative normal distribution function, and $z$ is an equivalent variable of $\upsilon$.

In some implementations, the communications device 1700 may further include a fourth receiving module 1770. The fourth receiving module 1770 may be configured to: before the transmitting module 1710 transmits the first-type data and/or the second-type data to the first device, receive a first frequency band allocation scheme transmitted by the first device, where the first frequency band allocation scheme may be used for determining the first frequency band and the second frequency band. Further, the communications device 1700 may further include a frequency band configuration module 1770. The frequency band configuration module 1770 may be configured to configure the first frequency band and the second frequency band based on the first frequency band allocation scheme.

In some implementations, the first frequency band and the second frequency band each are one of a plurality of orthogonal frequency bands.

FIG. 18 is a schematic diagram of a structure of a communications apparatus according to an embodiment of the present application. The communications apparatus 1800 in FIG. 18 may be configured to implement the methods described in the foregoing method embodiments. The apparatus 1800 may be a chip, a terminal device, or a base station.

The communications apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The communications apparatus 1800 may further include one or more memories 1820. The memory 1820 stores a program, and the program may be executed by the processor 1810, so that the processor 1810 executes the method described in the foregoing method embodiments. The memory 1820 may be separate from or integrated into the processor 1810.

The communications apparatus 1800 may further include a transceiver 1830. The processor 1810 may communicate with another device or chip by using the transceiver 1830. For example, the processor 1810 may transmit or receive data to or from another device or chip by using the transceiver 1830.

It should be understood that in this embodiment of the present application, the processor 1810 may be a general-purpose central processing unit (central processing unit, CPU), a microprocessor, an application-specific integrated circuit (application specific integrated circuit, ASIC), or one or more integrated circuits, and is configured to execute a related program to implement the technical solutions provided in embodiments of the present application.

The memory 1820 may include a read-only memory and a random access memory, and provide instructions and data to the processor 1810. A part of the processor 1810 may further include a non-volatile random access memory. For example, the processor 1810 may further store information about a device type.

In an implementation process, each step of the foregoing method may be completed by using an integrated logic circuit of hardware in the processor 1810 or an instruction in a form of software. The method for requesting an uplink transmission resource disclosed with reference to embodiments of the present application may be directly performed by using a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1820, and the processor 1810 reads information in the memory 1820 and completes the steps in the foregoing methods in combination with hardware of the processor. To avoid repetition, details are not described herein again.

It should be understood that the processor 1810 in embodiments of this specification may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

An embodiment of the present application further provides a computer-readable storage medium configured to store a program. The computer-readable storage medium may be applied to the communications device provided in embodiments of the present application, and the program causes a computer to perform the wireless communication methods to be performed by the computer in various embodiments of the present application.

An embodiment of the present application further provides a computer program product. The computer program product includes a program. The computer program product may be applied to the communications device provided in embodiments of the present application, and the program causes a computer to perform the wireless communication methods to be performed by a computer in various embodiments of the present application.

An embodiment of the present application further provides a computer program. The computer program may be applied to the communications device provided in embodiments of the present application, and the computer program causes a computer to perform the wireless communication methods to be performed by a computer in various embodiments of the present application.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

It should be understood that, in embodiments of the present application, sequence numbers of the foregoing processes do not mean a sequence of execution. The sequence of execution of the processes should be determined based on functions and internal logic of the processes, and should not be construed as any limitation on the implementation processes of embodiments of the present application.

In several embodiments provided in the present application, it should be understood that, the disclosed system, apparatus, and method may be implemented in other manners. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objectives of the solutions of embodiments.

In addition, functional units in embodiments of the present application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application.

**Claims**

1. A wireless communication method, comprising:

   receiving, by a first device, a calculation result of first-type data of one or more second devices and/or second-type data of one or more second devices,
   wherein the first-type data is to-be-calculated data, the first-type data of the one or more second devices is carried on a first frequency band, and the calculation result is determined based on channel superposition of the first frequency band; and
   the second-type data is non-calculation data, and the second-type data of the one or more second devices is carried on one or more second frequency bands.

2. The method according to claim 1, wherein the method further comprises:
   determining, by the first device based on whether at least one of the calculation result of the first-type data or the second-type data satisfies a quality determining condition, whether the second device needs to retransmit the first-type data and/or the second-type data.

3. The method according to claim 2, wherein the method further comprises:

if the calculation result of the first-type data does not satisfy the quality determining condition, discarding, by the first device, the calculation result of the first-type data, and transmitting a retransmission request of the calculation result of the first-type data to the one or more second devices; or
if the calculation result of the first-type data satisfies the quality determining condition, keeping, by the first device, the calculation result of the first-type data, and transmitting an initial transmission request of the calculation result of the first-type data to the one or more second devices.

4. The method according to claim 3, wherein a calculation process of the first-type data comprises a first-type time slice and a second-type time slice, the retransmission request is used to request the first-type time slice, the first-type time slice is used to retransmit the calculation result, whose quality does not satisfy the quality determining condition, of the first-type data, the initial transmission request is used to request the second-type time slice, and the second-type time slice is used for initially transmitting the calculation result of the first-type data.

5. The method according to claim 3 or 4, wherein the retransmission request or the initial transmission request is carried on the first frequency band.

6. The method according to any one of claims 2 to 5, wherein the method further comprises:

if the second-type data does not satisfy the quality determining condition, discarding, by the first device, the second-type data, and transmitting a retransmission request of the second-type data to the second device that transmits the second-type data; or
if quality of the second-type data satisfies the quality determining condition, keeping, by the first device, the second-type data, and transmitting an initial transmission request of the second-type data to the second device that transmits the second-type data.

7. The method according to claim 6, wherein a communication process of the second-type data comprises a first-type time slice and a second-type time slice, the retransmission request is used to request the first-type time slice, the first-type time slice is used to retransmit the second-type data whose quality does not satisfy the quality determining condition, the initial transmission request is used to request the second-type time slice, and the second-type time slice is used for initially transmitting the second-type data.

8. The method according to claim 6 or 7, wherein the retransmission request or the initial transmission request is carried on the second frequency band.

9. The method according to any one of claims 2 to 8, wherein the quality determining condition of the calculation result of the first-type data is that a mean square error value of the calculation result of the first-type data is less than a preset threshold.

10. The method according to claim 9, wherein the mean square error value of the calculation result of the first-type data is determined based on following formula:

$$MSE = \sum_{k=1}^{K} q_k^2 \, | \, \mathbf{v}^H \mathbf{h}_k - 1 |^2 + \frac{\tilde{\sigma}^2}{v},$$

wherein $MSE$ is the mean square error value of the calculation result of the first-type data, $q_k$ is an over-the-air computation weight of the second device $k$, $v$ is a beamforming vector used by the first device to receive the calculation result of the first-type data, $v$ is a normalization factor used by the first device to receive the calculation result of the first-type data, $\mathbf{h}_k$ is a channel state vector from the second device $k$ to the first device, and $\tilde{\sigma}^2$ is a noise power.

11. The method according to any one of claims 2 to 10, wherein the quality determining condition of the second-type data is that a data rate of the second-type data is greater than or equal to a preset threshold.

12. The method according to claim 11, wherein the data rate of the second-type data is determined based on a formula below:

$$R_k = B^D \, log_2 \left( 1 + \frac{\zeta |\boldsymbol{b}^H \boldsymbol{h}_k|^2}{\tilde{\sigma}^2} \right),$$

wherein $R_k$ is the data rate, $B^D$ is a bandwidth that is used for completing communication of the second-type data, $\boldsymbol{b}$ is a beamforming vector that is used by the first device to receive the second-type data, and $\zeta$ is a normalization factor that is used by the first device to receive the second-type data.

13. The method according to any one of claims 1 to 12, wherein before the receiving, by a first device, a calculation result of first-type data of one or more second devices and/or second-type data of one or more second devices, the method further comprises:
transmitting, by the first device, a first power factor allocation scheme to the one or more second devices, wherein the first power factor allocation scheme is used for determining a calculation power factor and/or a communication power factor, the calculation power factor is a transmit power of the first-type data on the first frequency band, and the communication power factor is a transmit power of the second-type data on the second frequency band.

14. The method according to claim 13, wherein the first power factor allocation scheme is determined based on a first power factor allocation optimization problem, and the first power factor allocation optimization problem is:

$$\min_{\zeta, \upsilon} T^{ALL} + (1 - \alpha)E^{ALL},$$

wherein $\upsilon$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of the first-type data and/or the communication process of the second-type data, $\alpha$ is a constant greater than 0 and less than 1, and $\alpha$ is a weighting factor of the total expected delay and the total expected energy consumption.

15. The method according to claim 14, wherein the first power factor allocation optimization problem has a first power factor allocation constraint, and the first power factor allocation constraint is related to a plurality of following factors: a minimum calculation success probability correlation of the first-type data, a path loss value of the second device, a maximum transmit power and a minimum transmit power that can be used by the second device for calculation or communication, or a minimum calculation success probability of the first-type data.

16. The method according to claim 15, wherein an optimal solution of the first power factor allocation optimization problem is determined based on an optimal solution of a second power factor allocation optimization problem.

17. The method according to claim 16, wherein update completion of the optimal solution is determined based on at least one of following conditions:

that the first power factor allocation optimization problem is target non-growth, wherein the target non-growth is determined based on a case in which a target value of the first power factor allocation optimization problem in the $n_1$th round of algorithm iteration is not greater than a target value of the first power factor allocation optimization problem in the $(n_1 - 1)$th round of algorithm iteration; or
that the optimal solution is feasible, wherein that the optimal solution is feasible is determined based on a case in which an updated optimal solution does not violate the first power factor allocation constraint.

18. The method according to claim 17, wherein the update completion of the optimal solution is further determined based on target convergence of the first power factor allocation optimization problem, and the target convergence is determined based on a case in which an absolute value of a difference between the target value of the first power factor allocation optimization problem in the $n_1$th round of algorithm iteration and the target value of the first power factor allocation optimization problem in the $(n_1 - 1)$th round of algorithm iteration is not greater than a preset threshold.

19. The method according to any one of claims 1 to 18, wherein the method further comprises:
determining, by the first device, whether calculation of the first-type data is completed, and/or whether communication of the second-type data is completed.

20. The method according to claim 19, wherein whether calculation of the first-type data is completed is determined based on a case in which the one or more second devices complete transmission of the first-type data on the first frequency band.

21. The method according to claim 19 or 20, wherein the method further comprises:
if calculation of the first-type data is not completed, transmitting, by the first device, an initial transmission request of the first-type data to the one or more second devices.

22. The method according to any one of claims 19 to 21, wherein whether communication of the second-type data is completed is determined based on a case in which the one or more second devices separately complete transmission of the second-type data on the second frequency band.

23. The method according to any one of claims 19 to 22, wherein the method further comprises:
if communication of the second-type data is not completed, transmitting, by the first device, an initial transmission request of the second-type data to the second device that does not complete the communication.

24. The method according to any one of claims 1 to 23, wherein before the first device receives the first-type data and/or the second-type data transmitted by the one or more second devices, the method further comprises:
transmitting, by the first device, a first frequency band allocation scheme to the one or more second devices, wherein the first frequency band allocation scheme is used for determining the first frequency band and the second frequency band.

25. The method according to any one of claims 1 to 24, wherein the first frequency band and the plurality of second frequency bands are orthogonal.

26. A wireless communication method, comprising:

transmitting, by a second device, first-type data and/or second-type data to a first device,
wherein the first-type data is to-be-calculated data, the first-type data is carried on a first frequency band, and calculation of the first-type data is implemented based on channel superposition of the first frequency band; and the second-type data is non-calculation data, and the second-type data is carried on a second frequency band.

27. The method according to claim 26, wherein the method further comprises:

if a calculation result of the first-type data does not satisfy a quality determining condition, receiving, by the second device, a retransmission request, transmitted by the first device, of the calculation result of the first-type data; or
if a calculation result of the first-type data satisfies the quality determining condition, receiving, by the second device, an initial transmission request, transmitted by the first device, of the calculation result of the first-type data.

28. The method according to claim 27, wherein a calculation process of the first-type data comprises a first-type time slice and a second-type time slice, the retransmission request is used to request the first-type time slice, the first-type time slice is used to retransmit the calculation result, whose quality does not satisfy the quality determining condition, of the first-type data, the initial transmission request is used to request the second-type time slice, and the second-type time slice is used for initially transmitting the calculation result of the first-type data.

29. The method according to claim 27 or 28, wherein the retransmission request or the initial transmission request is carried on the first frequency band.

30. The method according to any one of claims 27 to 29, wherein the method further comprises:

if the second-type data does not satisfy the quality determining condition, receiving, by the second device, a retransmission request, transmitted by the first device, of the second-type data; or
if quality of the second-type data does not satisfy the quality determining condition, receiving, by the second device, an initial transmission request, transmitted by the first device, of the second-type data.

31. The method according to claim 30, wherein a communication process of the second-type data comprises a first-type time slice and a second-type time slice, the retransmission request is used to request the first-type time slice, the first-type time slice is used to retransmit the second-type data whose quality does not satisfy the quality determining condition, the initial transmission request is used to request the second-type time slice, and the second-type time slice is used for initially transmitting the second-type data.

32. The method according to claim 30 or 31, wherein the retransmission request or the initial transmission request is carried on the second frequency band.

33. The method according to any one of claims 27 to 32, wherein the quality determining condition of the calculation result of the first-type data is that a mean square error value of the calculation result of the first-type data is less than a preset threshold.

34. The method according to claim 33, wherein the mean square error value of the calculation result of the first-type data is determined based on following formula:

$$MSE = \Sigma_{k=1}^{K} q_k^2 \, | \, v^H \mathrm{h}_k - 1 |^2 + \frac{\tilde{\sigma}^2}{v} \, ,$$

wherein $MSE$ is the mean square error value of the calculation result of the first-type data, $q_k$ is an over-the-air computation weight of the second device $k$, $v$ is a beamforming vector used by the first device to receive the calculation result of the first-type data, $v$ is a normalization factor used by the first device to receive the calculation result of the first-type data, $\mathrm{h}_k$ is a channel state vector from the second device $k$ to the first device, and $\tilde{\sigma}^{35}$ is a noise power.

35. The method according to any one of claims 27 to 34, wherein the quality determining condition of the second-type data is that a data rate of the second-type data is greater than or equal to a preset threshold.

36. The method according to claim 35, wherein the data rate of the second-type data is determined based on a formula below:

$$R_k = B^D \, log_2 \left( 1 + \frac{\zeta |b^H h_k|^2}{\tilde{\sigma}^2} \right),$$

wherein $R_k$ is the data rate, $B^D$ is a bandwidth that is used for completing communication of the second-type data, $b$ is a beamforming vector that is used by the first device to receive the second-type data, and $\zeta$ is a normalization factor that is used by the first device to receive the second-type data.

37. The method according to any one of claims 26 to 36, wherein before the second device transmits the first-type data and/or the second-type data to the first device, the method further comprises:
receiving, by the second device, a first power factor allocation scheme transmitted by the first device, wherein the first power factor allocation scheme is used for determining a calculation power factor and/or a communication power factor, the calculation power factor is a transmit power of the first-type data on the first frequency band, and the communication power factor is a transmit power of the second-type data on the second frequency band.

38. The method according to claim 37, wherein the first power factor allocation scheme is determined based on a first power factor allocation optimization problem, and the first power factor allocation optimization problem is:

$$\min_{\zeta, \upsilon} T^{ALL} + (1 - \alpha)E^{ALL},$$

wherein $\upsilon$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of the first-type data and/or the communication process of the second-type data, $\alpha$ is a constant greater than 0 and less than 1, and $\alpha$ is a weighting factor of the total expected delay and the total expected energy consumption.

39. The method according to claim 38, wherein the first power factor allocation optimization problem has a first power factor allocation constraint, and the first power factor allocation constraint is related to a plurality of following factors: a minimum calculation success probability correlation of the first-type data, a path loss value of the second device, a maximum transmit power and a minimum transmit power that can be used by the second device for calculation or communication, or a minimum calculation success probability of the first-type data.

40. The method according to claim 39, wherein an optimal solution of the first power factor allocation optimization problem is determined based on an optimal solution of a second power factor allocation optimization problem.

41. The method according to claim 40, wherein update completion of the optimal solution is determined based on at least one of following conditions:

that the first power factor allocation optimization problem is target non-growth, wherein the target non-growth is determined based on a case in which a target value of the first power factor allocation optimization problem in the $n_1$th round of algorithm iteration is not greater than a target value of the first power factor allocation optimization problem in the $(n_1 - 1)$th round of algorithm iteration; or
that the optimal solution is feasible, wherein that the optimal solution is feasible is determined based on a case in which an updated optimal solution does not violate the first power factor allocation constraint.

42. The method according to claim 41, wherein the update completion of the optimal solution is further determined based on target convergence of the first power factor allocation optimization problem, and the target convergence is determined based on a case in which an absolute value of a difference between the target value of the first power factor allocation optimization problem in the $n_1$th round of algorithm iteration and the target value of the first power factor allocation optimization problem in the $(n_1 - 1)$th round of algorithm iteration is not greater than a preset threshold.

43. The method according to any one of claims 26 to 42, wherein before the second device transmits the first-type data and/or the second-type data to the first device, the method further comprises:
receiving, by the second device, a first frequency band allocation scheme transmitted by the first device, wherein the first frequency band allocation scheme is used for determining the first frequency band and the second frequency band.

44. The method according to any one of claims 26 to 43, wherein the first frequency band or the second frequency band is one of a plurality of orthogonal frequency bands.

45. A communications device, wherein the communications device is a first device, and the communications device comprises:

a receiving module, receiving a calculation result of first-type data of one or more second devices and/or second-type data of one or more second devices,
wherein the first-type data is to-be-calculated data, the first-type data of the one or more second devices is carried on a first frequency band, and the calculation result is determined based on channel superposition of the first frequency band; and
the second-type data is non-calculation data, and the second-type data of the one or more second devices is carried on one or more second frequency bands.

46. The communications device according to claim 45, wherein the communications device further comprises:
a first determining module, determining, based on whether at least one of the calculation result of the first-type data or the second-type data satisfies a quality determining condition, whether the second device needs to retransmit the first-type data and/or the second-type data.

47. The communications device according to claim 46, wherein the communications device further comprises:

a first transmitting module, when the determining module determines that the calculation result of the first-type data does not satisfy the quality determining condition, discarding the calculation result of the first-type data, and transmitting a retransmission request of the calculation result of the first-type data to the one or more second devices; or
when the determining module determines that the calculation result of the first-type data satisfies the quality determining condition, keeping the calculation result of the first-type data, and transmitting an initial transmission request of the calculation result of the first-type data to the one or more second devices.

**48.** The communications device according to claim 47, wherein a calculation process of the first-type data comprises a first-type time slice and a second-type time slice, the retransmission request is used to request the first-type time slice, the first-type time slice is used to retransmit the calculation result, whose quality does not satisfy the quality determining condition, of the first-type data, the initial transmission request is used to request the second-type time slice, and the second-type time slice is used for initially transmitting the calculation result of the first-type data.

**49.** The communications device according to claim 47 or 48, wherein the retransmission request or the initial transmission request is carried on the first frequency band.

**50.** The communications device according to any one of claims 46 to 49, wherein the communications device further comprises:

a second transmitting module, when the second-type data does not satisfy the quality determining condition, discarding the second-type data, and transmitting a retransmission request of the second-type data to the second device that transmits the second-type data; or
when quality of the second-type data satisfies the quality determining condition, keeping the second-type data, and transmitting an initial transmission request of the second-type data to the second device that transmits the second-type data.

**51.** The communications device according to claim 50, wherein a communication process of the second-type data comprises a first-type time slice and a second-type time slice, the retransmission request is used to request the first-type time slice, the first-type time slice is used to retransmit the second-type data whose quality does not satisfy the quality determining condition, the initial transmission request is used to request the second-type time slice, and the second-type time slice is used for initially transmitting the second-type data.

**52.** The communications device according to claim 50 or 51, wherein the retransmission request or the initial transmission request is carried on the second frequency band.

**53.** The communications device according to any one of claims 46 to 52, wherein the quality determining condition of the calculation result of the first-type data is that a mean square error value of the calculation result of the first-type data is less than a preset threshold.

**54.** The communications device according to claim 53, wherein the mean square error value of the calculation result of the first-type data is determined based on following formula:

$$MSE = \Sigma_{k=1}^{K} q_k^2 \, | \, v^H h_k - 1|^2 + \frac{\tilde{\sigma}^2}{v},$$

wherein $MSE$ is the mean square error value of the calculation result of the first-type data, $q_k$ is an over-the-air computation weight of the second device $k$, $v$ is a beamforming vector used by the first device to receive the calculation result of the first-type data, $v$ is a normalization factor used by the first device to receive the calculation result of the first-type data, $h_k$ is a channel state vector from the second device $k$ to the first device, and $\tilde{\sigma}^2$ is a noise power.

**55.** The communications device according to any one of claims 46 to 54, wherein the quality determining condition of the second-type data is that a data rate of the second-type data is greater than or equal to a preset threshold.

**56.** The communications device according to claim 55, wherein the data rate of the second-type data is determined based on a formula below:

$$R_k = B^D \, log_2 \left( 1 + \frac{\zeta |b^H h_k|^2}{\tilde{\sigma}^2} \right),$$

wherein $R_k$ is the data rate, $B^D$ is a bandwidth that is used for completing communication of the second-type data, $b$ is a beamforming vector that is used by the first device to receive the second-type data, and $\zeta$ is a normalization factor that is used by the first device to receive the second-type data.

57. The communications device according to any one of claims 45 to 56, wherein the communications device further comprises:
a third transmitting module, before the receiving module receives the calculation result of the first-type data of the one or more second devices and/or the second-type data of the one or more second devices, transmitting a first power factor allocation scheme to the one or more second devices, wherein the first power factor allocation scheme is used for determining a calculation power factor and/or a communication power factor, the calculation power factor is a transmit power of the first-type data on the first frequency band, and the communication power factor is a transmit power of the second-type data on the second frequency band.

58. The communications device according to claim 57, wherein the first power factor allocation scheme is determined based on a first power factor allocation optimization problem, and the first power factor allocation optimization problem is:

$$\min_{\zeta,\upsilon} T^{ALL} + (1 - \alpha)E^{ALL},$$

wherein $\upsilon$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of the first-type data and/or the communication process of the second-type data, $\alpha$ is a constant greater than 0 and less than 1, and $\alpha$ is a weighting factor of the total expected delay and the total expected energy consumption.

59. The communications device according to claim 58, wherein the first power factor allocation optimization problem has a first power factor allocation constraint, and the first power factor allocation constraint is related to a plurality of following factors:
a minimum calculation success probability correlation of the first-type data, a path loss value of the second device, a maximum transmit power and a minimum transmit power that can be used by the second device for calculation or communication, or a minimum calculation success probability of the first-type data.

60. The communications device according to claim 59, wherein an optimal solution of the first power factor allocation optimization problem is determined based on an optimal solution of a second power factor allocation optimization problem.

61. The communications device according to claim 60, wherein update completion of the optimal solution is determined based on at least one of following conditions:

that the first power factor allocation optimization problem is target non-growth, wherein the target non-growth is determined based on a case in which a target value of the first power factor allocation optimization problem in the $n_1^{th}$ round of algorithm iteration is not greater than a target value of the first power factor allocation optimization problem in the $(n_1 - 1)^{th}$ round of algorithm iteration; or
that the optimal solution is feasible, wherein that the optimal solution is feasible is determined based on a case in which an updated optimal solution does not violate the first power factor allocation constraint.

62. The communications device according to claim 61, wherein the update completion of the optimal solution is further determined based on target convergence of the first power factor allocation optimization problem, and the target convergence is determined based on a case in which an absolute value of a difference between the target value of the first power factor allocation optimization problem in the $n_1^{th}$ round of algorithm iteration and the target value of the first power factor allocation optimization problem in the $(n_1 - 1)^{th}$ round of algorithm iteration is not greater than a preset threshold.

63. The communications device according to any one of claims 45 to 62, wherein the communications device further comprises:
a second determining module, determining whether calculation of the first-type data is completed, and/or whether communication of the second-type data is completed.

64. The communications device according to claim 63, wherein whether calculation of the first-type data is completed is determined based on a case in which the one or more second devices complete transmission of the first-type data on the first frequency band.

**65.** The communications device according to claim 63 or 64, wherein the communications device further comprises: a fourth transmitting module, when calculation of the first-type data is not completed, transmitting an initial transmission request of the first-type data to the one or more second devices.

**66.** The communications device according to any one of claims 63 to 65, wherein whether communication of the second-type data is completed is determined based on a case in which the one or more second devices separately complete transmission of the second-type data on the second frequency band.

**67.** The communications device according to any one of claims 63 to 66, wherein the communications device further comprises: a fifth transmitting module, when communication of the second-type data is not completed, transmitting an initial transmission request of the second-type data to the second device that does not complete the communication.

**68.** The communications device according to any one of claims 45 to 67, wherein the communications device further comprises: a sixth transmitting module, before the receiving module receives the first-type data and/or the second-type data transmitted by the one or more second devices, transmitting a first frequency band allocation scheme to the one or more second devices, wherein the first frequency band allocation scheme is used for determining the first frequency band and the second frequency band.

**69.** The communications device according to any one of claims 45 to 68, wherein the first frequency band and the plurality of second frequency bands are orthogonal.

**70.** A communications device, wherein the communications device is a second device, and the communications device comprises:

a transmitting module, transmitting first-type data and/or second-type data to a first device, wherein the first-type data is to-be-calculated data, the first-type data is carried on a first frequency band, and calculation of the first-type data is implemented based on channel superposition of the first frequency band; and the second-type data is non-calculation data, and the second-type data is carried on a second frequency band.

**71.** The communications device according to claim 70, wherein the communications device further comprises:

a first receiving module, when a calculation result of the first-type data does not satisfy a quality determining condition, receiving a retransmission request, transmitted by the first device, of the calculation result of the first-type data; or
when a calculation result of the first-type data satisfies the quality determining condition, receiving an initial transmission request, transmitted by the first device, of the calculation result of the first-type data.

**72.** The communications device according to claim 71, wherein a calculation process of the first-type data comprises a first-type time slice and a second-type time slice, the retransmission request is used to request the first-type time slice, the first-type time slice is used to retransmit the calculation result, whose quality does not satisfy the quality determining condition, of the first-type data, the initial transmission request is used to request the second-type time slice, and the second-type time slice is used for initially transmitting the calculation result of the first-type data.

**73.** The communications device according to claim 71 or 72, wherein the retransmission request or the initial transmission request is carried on the first frequency band.

**74.** The communications device according to any one of claims 70 to 73, wherein the communications device further comprises:

a second receiving module, when the second-type data does not satisfy a quality determining condition, receiving a retransmission request, transmitted by the first device, of the second-type data; or
when quality of the second-type data satisfies the quality determining condition, receive an initial transmission request, transmitted by the first device, of the second-type data.

**75.** The communications device according to claim 74, wherein a communication process of the second-type data comprises a first-type time slice and a second-type time slice, the retransmission request is used to request the first-type time slice, the first-type time slice is used to retransmit the second-type data whose quality does not satisfy the quality determining condition, the initial transmission request is used to request the second-type time slice, and the second-type time slice is used for initially transmitting the second-type data.

76. The communications device according to claim 74 or 75, wherein the retransmission request or the initial transmission request is carried on the second frequency band.

77. The communications device according to any one of claims 71 to 76, wherein the quality determining condition of the calculation result of the first-type data is that a mean square error value of the calculation result of the first-type data is less than a preset threshold.

78. The communications device according to claim 77, wherein the mean square error value of the calculation result of the first-type data is determined based on following formula:

$$MSE = \Sigma_{k=1}^{K} q_k^2 \mid v^H h_k - 1 \mid^2 + \frac{\tilde{\sigma}^2}{v} \;,$$

wherein $MSE$ is the mean square error value of the calculation result of the first-type data, $q_k$ is an over-the-air computation weight of the second device $k$, $v$ is a beamforming vector used by the first device to receive the calculation result of the first-type data, v is a normalization factor used by the first device to receive the calculation result of the first-type data, $h_k$ is a channel state vector from the second device k to the first device, and $\tilde{\sigma}10325$ is a noise power.

79. The communications device according to any one of claims 71 to 78, wherein the quality determining condition of the second-type data is that a data rate of the second-type data is greater than or equal to a preset threshold.

80. The communications device according to claim 79, wherein the data rate of the second-type data is determined based on a formula below:

$$R_k = B^D \, log_2 \left( 1 + \frac{\zeta \mid b^H h_k \mid^2}{\tilde{\sigma}^2} \right),$$

wherein $R_k$ is the data rate, $B^D$ is a bandwidth that is used for completing communication of the second-type data, $b$ is a beamforming vector that is used by the first device to receive the second-type data, and $\zeta$ is a normalization factor that is used by the first device to receive the second-type data.

81. The communications device according to any one of claims 70 to 80, wherein the communications device further comprises:
a third receiving module, before the transmitting module transmits the first-type data and/or the second-type data to the first device, receiving a first power factor allocation scheme transmitted by the first device, wherein the first power factor allocation scheme is used for determining a calculation power factor and/or a communication power factor, the calculation power factor is a transmit power of the first-type data on the first frequency band, and the communication power factor is a transmit power of the second-type data on the second frequency band.

82. The communications device according to claim 81, wherein the first power factor allocation scheme is determined based on a first power factor allocation optimization problem, and the first power factor allocation optimization problem is:

$$\min_{\zeta, \upsilon} T^{ALL} + (1 - \alpha) E^{ALL},$$

wherein $\upsilon$ is the calculation power factor, $\zeta$ is the communication power factor, $T^{ALL}$ is a total expected delay of a calculation process of the first-type data and/or a communication process of the second-type data, $E^{ALL}$ is a total expected energy consumption of the calculation process of the first-type data and/or the communication process of the second-type data, $\alpha$ is a constant greater than 0 and less than 1, and $\alpha$ is a weighting factor of the total expected delay and the total expected energy consumption.

83. The communications device according to claim 82, wherein the first power factor allocation optimization problem has a first power factor allocation constraint, and the first power factor allocation constraint is related to a plurality of following factors:
a minimum calculation success probability correlation of the first-type data, a path loss value of the second device, a maximum transmit power and a minimum transmit power that can be used by the second device for calculation or communication, or a minimum calculation success probability of the first-type data.

84. The communications device according to claim 83, wherein an optimal solution of the first power factor allocation optimization problem is determined based on an optimal solution of a second power factor allocation optimization problem.

85. The communications device according to claim 84, wherein update completion of the optimal solution is determined based on at least one of following conditions:

that the first power factor allocation optimization problem is target non-growth, wherein the target non-growth is determined based on a case in which a target value of the first power factor allocation optimization problem in the $n_1$th round of algorithm iteration is not greater than a target value of the first power factor allocation optimization problem in the $(n_1 - 1)$th round of algorithm iteration; or
that the optimal solution is feasible, wherein that the optimal solution is feasible is determined based on a case in which an updated optimal solution does not violate the first power factor allocation constraint.

86. The communications device according to claim 85, wherein the update completion of the optimal solution is further determined based on target convergence of the first power factor allocation optimization problem, and the target convergence is determined based on a case in which an absolute value of a difference between the target value of the first power factor allocation optimization problem in the $n_1$th round of algorithm iteration and the target valuex of the first power factor allocation optimization problem in the $n_1$th round of algorithm iteration is not greater than a preset threshold.

87. The communications device according to any one of claims 70 to 86, wherein the communications device further comprises:
a fourth receiving module, before the transmitting module transmits the first-type data and/or the second-type data to the first device, receiving a first frequency band allocation scheme transmitted by the first device, wherein the first frequency band allocation scheme is used for determining the first frequency band and the second frequency band.

88. The communications device according to any one of claims 70 to 87, wherein the first frequency band or the second frequency band is one of a plurality of orthogonal frequency bands.

89. A communications device, comprising a transceiver, a memory, and a processor, wherein the memory is configured to store a program; and the processor is configured to: invoke the program in the memory, and control the transceiver to receive or transmit a signal, to cause the communications device to perform the method according to any one of claims 1 to 25.

90. A communications device, comprising a transceiver, a memory, and a processor, wherein the memory is configured to store a program; and the processor is configured to: invoke the program in the memory, and control the transceiver to receive or transmit a signal, to cause the communications device to perform the method according to any one of claims 26 to 44.

91. A device, comprising a processor, invoking a program from a memory, to cause the device to perform the method according to any one of claims 1 to 25 or claims 26 to 44.

92. A chip, comprising a processor, invoking a program from a memory, to cause a device installed with the chip to perform the method according to any one of claims 1 to 25 or claims 26 to 44.

93. A computer-readable storage medium, wherein the computer-readable storage medium stores a program, and the program causes a computer to perform the method according to any one of claims 1 to 25 or claims 26 to 44.

94. A computer program product, comprising a program that causes a computer to perform the method according to any one of claims 1 to 25 or claims 26 to 44.

**95.** A computer program, wherein the computer program causes a computer to perform the method according to any one of claims 1 to 25 or claims 26 to 44.

100

110

120

FIG. 1

| A first device receives a calculation result of first-type data of one or more second devices and/or second-type data of one or more second devices | S210 |

FIG. 2

| A first device receives a calculation result of first-type data of one or more second devices and/or second-type data of one or more second devices | S310 |

| The first device determines, based on whether at least one of the calculation result of the first-type data or the second-type data satisfies a quality determining condition, whether the second device needs to retransmit the first-type data and/or the second-type data | S320 |

FIG. 3

| A first device receives a calculation result of first-type data of one or more second devices and/or second-type data of one or more second devices | S410 |

| The first device determines, based on whether at least one of the calculation result of the first-type data or the second-type data satisfies a quality determining condition, whether the second device needs to retransmit the first-type data and/or the second-type data | S420 |

| If the calculation result of the first-type data does not satisfy the quality determining condition, the first device discards the calculation result of the first-type data, and transmits a retransmission request of the calculation result of the first-type data to the one or more second devices; or if the calculation result of the first-type data satisfies the quality determining condition, the first device keeps the calculation result of the first-type data, and transmits an initial transmission request of the calculation result of the first-type data to the one or more second devices | S430 |

FIG. 4

First-type data of second devices

Initial calculation process time slice

Retransmission calculation process time slice

First frequency band

...

Calculated first-type data

**FIG. 5**

| A first device receives a calculation result of first-type data of one or more second devices and/or second-type data of one or more second devices | S610 |

| The first device determines, based on whether at least one of the calculation result of the first-type data or the second-type data satisfies a quality determining condition, whether the second device needs to retransmit the first-type data and/or the second-type data | S620 |

| If the second-type data does not satisfy the quality determining condition, the first device discards the second-type data, and transmits a retransmission request of the second-type data to the second device that transmits the second-type data; or if quality of the second-type data satisfies the quality determining condition, the first device keeps the second-type data, and transmits an initial transmission request of the second-type data to the second device that transmits the second-type data | S630 |

**FIG. 6**

Initial communication process time slice    Retransmission communication process time slice

Second frequency band

Second-type data of a second device 1

...

Second-type data of the second device 1

⋮

Second frequency band

Second-type data of a second device $K$

...

Second-type data of the second device $K$

**FIG. 7**

A first device transmits a first power factor allocation scheme to one or more second devices ⎯ S800

The first device receives a calculation result of first-type data of the one or more second devices and/or second-type data of the one or more second devices ⎯ S810

FIG. 8

A first device receives a calculation result of first-type data of one or more second devices and/or second-type data of one or more second devices ⎯ S910

The first device determines whether calculation of the first-type data is completed, and/or whether communication of the second-type data is completed ⎯ S920

FIG. 9

A first device transmits a first frequency band allocation scheme to one or more second devices ⎯ S1000

The first device receives a calculation result of first-type data of the one or more second devices and/or second-type data of the one or more second devices ⎯ S1010

FIG. 10

FIG. 11

Giving initial feasible power allocation factors — S1201

Performing variable substitution on a calculation power allocation factor — S1202

Performing first-order Taylor expansion on a first power factor allocation optimization problem — S1203

Solving a second power factor allocation optimization problem to obtain an optimal solution — S1204

Calculating an optimal-solution backtracking direction — S1205

Attenuating an optimal-solution backtracking step — S1206

Updating the optimal solution by using the optimal-solution backtracking direction and the optimal-solution backtracking step — S1207

Determining whether the first power factor allocation optimization problem is target non-growth and whether the optimal solution is feasible — S1208

No

Yes

Determining whether the first power factor allocation optimization problem reaches target convergence — S1209

No

Yes

Performing inverse variable substitution on the calculation power allocation factor — S1210

Ending a transmit power factor allocation algorithm, and output a calculation power factor and communication power factor allocation scheme — S1211

FIG. 12

EP 4 716 331 A1

A receive-end device notifies all transmit-end devices of a frequency band 0 of calculation type-A data and frequency bands 1 to K of communication type-B data — S131

A transmit-end device *k* transmits the type-A data to the receive-end device on the frequency band 0, and transmits the type-B data to the receive-end device on a frequency band *k* — S132

The receive-end device determines whether data on each frequency band satisfies a quality determining condition — S133

S13420 — The receive-end device initiates an initial transmission request of the type-A data to all the transmit-end devices

S13320 — The receive-end device initiates a retransmission request of the type-A data to all the transmit-end devices

S13321 — The receive-end device initiates a retransmission request of type-B data to a transmit-end device 1

S13310 — Determining whether a calculation result of the type-A data satisfies — No

S13311 — Determining whether type-B data of a transmit-end device 1 satisfies — No

S1331K — Determining whether type-B data of a transmit-end device *K* satisfies — No

S1332K — The receive-end device initiates a retransmission request of type-B data to a transmit-end device *K*

S13421 — The receive-end device initiates an initial transmission request of the type-B data to the transmit-end device 1

Yes / Yes / Yes

S134 — The receive-end device receives the calculation result of the type-A data on the frequency band 0, and simultaneously receives the type-B data on the frequency bands 1 to *K*

S13410 — Determining whether calculation of the type-A data is completed — No / Yes

S13411 — Determining whether the type-B data of the transmit-end device 1 is completed — No / Yes

S1342K — The receive-end device initiates an initial transmission request of the type-B data to the transmit-end device *K*

S1341K — Determining whether the type-B data of the transmit-end device *K* is completed — No / Yes

S135 — Ending a fast channel fluctuation–resistant communication-calculation integrated architecture working procedure

FIG. 13

38

FIG. 14

Receive-end device

Transmit-end device 1

Transmit-end device 2

Transmit-end device *K*

Transmit-end device *k*

...

Transmit-end device *K*–1

⟶ The transmit-end device feeds back a status/delivers a control command

⇢ The transmit-end device collects data and passes back the data

FIG. 15

Communications device 1600

Receiving module 1610

FIG. 16

Communications device 1700

Transmitting module 1710

FIG. 17

Communications apparatus 1800

Processor
1810

Memory
1820

Transceiver
1830

FIG. 18

## INTERNATIONAL SEARCH REPORT

| | International application No. |
|---|---|
| | **PCT/CN2024/080379** |

**A. CLASSIFICATION OF SUBJECT MATTER**

H04W 72/044(2023.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNABS; CNTXT; CNKI; VEN; ENTXT; USTXT; 3GPP: 空中, 计算, 一体化, 频段, 信道, 叠加, 复用, 数据, 方差, 重传, over air, space-air, computation, integrated, SAGC, frequency, channel, multiplex, data, variance, retransmission

**C. DOCUMENTS CONSIDERED TO BE RELEVANT**

| Category* | Citation of document, with indication, where appropriate, of the relevant passages | Relevant to claim No. |
|---|---|---|
| A | CN 117354837 A (SOUTHWEST UNIVERSITY OF SCIENCE AND TECHNOLOGY et al.) 05 January 2024 (2024-01-05) entire document | 1-95 |
| A | CN 114286291 A (SHANGHAI JIAO TONG UNIVERSITY) 05 April 2022 (2022-04-05) entire document | 1-95 |
| A | CN 114554612 A (HUAWEI TECHNOLOGIES CO., LTD.) 27 May 2022 (2022-05-27) entire document | 1-95 |
| A | US 2019260514 A1 (ALCATEL LUCENT) 22 August 2019 (2019-08-22) entire document | 1-95 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 November 2024** | **19 November 2024** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080379**

| Patent document cited in search report | | | Publication date (day/month/year) | Patent family member(s) | | | Publication date (day/month/year) |
|---|---|---|---|---|---|---|---|
| CN | 117354837 | A | 05 January 2024 | None | | | |
| CN | 114286291 | A | 05 April 2022 | None | | | |
| CN | 114554612 | A | 27 May 2022 | None | | | |
| US | 2019260514 | A1 | 22 August 2019 | WO | 2018019657 | A1 | 01 February 2018 |
| | | | | EP | 3276865 | A1 | 31 January 2018 |

Form PCT/ISA/210 (patent family annex) (July 2022)